Europäisches Patentamt

European Patent Office

Office européen des brevets

(11) Veröffentlichungsnummer: **0 177 063 B1**

## (12) EUROPÄISCHE PATENTSCHRIFT

(45) Veröffentlichungstag der Patentschrift: **13.11.91**

(51) Int. Cl.⁵: **B41M 5/26**, G11B 7/24

(21) Anmeldenummer: **85112656.5**

(22) Anmeldetag: **07.10.85**

(54) Verfahren zur Darstellung optisch ablesbarer Information.

(30) Priorität: **05.10.84 DE 3436476**

(43) Veröffentlichungstag der Anmeldung:
**09.04.86 Patentblatt 86/15**

(45) Bekanntmachung des Hinweises auf die
Patenterteilung:
**13.11.91 Patentblatt 91/46**

(84) Benannte Vertragsstaaten:
**FR GB IT NL**

(56) Entgegenhaltungen:
EP-A- 0 014 826     DE-A- 1 571 845
DE-A- 1 778 533     DE-A- 2 030 652
JP-A-60 180 887     US-A- 3 847 644

PATENT ABSTRACTS OF JAPAN, Band 5, Nr.
118 (P-73)[790], 30. Juli 1981; & JP-A-56 58
142 (KUREHA KAGAKU KOGYO K.K.)
21-05-1981

(73) Patentinhaber: **Röhm GmbH**
**Kirschenallee Postfach 4242**
**W-6100 Darmstadt 1(DE)**

(72) Erfinder: **Siol, Werner, Dr.**
**Goerdelerweg 34**
**W-6100 Darmstadt(DE)**

EP 0 177 063 B1

## Beschreibung

Gebiet der Erfindung

Die Erfindung betrifft ein Verfahren zur Aufzeichnung, Speicherung und Darstellung optisch ablesbarer Information unter Verwendung eines als Informationsträger geeigneten Kunststoffmaterials.

Stand der Technik

Verschiedene Polymerspecies sind im allgemeinen infolge der geringen Mischungsentropie der langen Polymerketten und der positiven Mischungsenergie zwischen Polymeren miteinander unverträglich. Der Befund, daß gewisse Polymersysteme entgegen der allgemeinen Tendenz Mischbarkeit zeigen, forderte daher eine theoretisch begründete Deutung der Phänomene heraus.

So ist beispielsweise Polyvinylidenfluorid mit Polymethylmethacrylat (PMMA) und mit Polyethylmethacrylat mischbar (US-PS 3 253 060, US-PS 3 458 391, US-PS 3 459 843). Zur Erklärung wurde ein Konzept entwickelt, wonach spezifische Wechselwirkung zwischen Gruppen **komplementärer Unähnlichkeit** in zwei Polymeren einen positiven Beitrag zu deren Mischungswärme leisten sollte. Dieses Konzept schien als Auswahlkriterium für weitere mischbare binäre Polymersysteme geeignet zu sein. (D.R. Paul et al.. Polymer Engineering & Science 18. (16) 1225 - 1234 (1978); J. Macromol.Sci.-Rev.Macromol.Chem.C. 18 (1). 109-168 (1980). Kirk-Othmer 3$^{rd}$ Ed.Vol. 18, 443-478, J. Wiley, 1982). Die erstere Literaturstelle gibt auch eine Zusammenstellung bekannter mischbarer Polymersysteme an. Zum Nachweis der Mischbarkeit wurde häufig die Glastemperatur Tg der Mischungen herangezogen.

Als ein anderer Test auf die Mischbarkeit von Polymeren wird das Auftreten der **Lower Critical Solution Temperature (LCST)** herangezogen. Die Existenz des LCST beruht auf dem Vorgang, daß sich beim Erwärmen die bis anhin klare Mischung in Phasen auftrennt und optisch trübe wird. Dieses Verhalten stellt einen eindeutigen Beweis dafür dar. daß die ursprüngliche Polymermischung aus einer einzigen. im Gleichgewicht befindlichen homogenen Phase bestand.

Bei manchen Systemen ist die Entmischung ein beim Abkühlen reversibler Vorgang. Für folgende Polymersysteme wurde bisher LCST-Verhalten berichtet. PMMA/Styrol-Acrylnitril-Copolymere; Polystyrol/Polyvinylmethylether; Poly(ε-caprolacton)/Styrol-Acrylnitril-Copolymere; Chlorkautschuk/Ethylen-Vinylacetat-Copolymere; PVC/Ethylen-Vinylacetat-Copolymere; Poly(ε-caprolacton)/Polycarbonat; Polyvinylidenfluorid/PMMA; Polyvinylidenfluorid/Polyethylmethacrylat; Polyvinylidenfluorid/Polymethylacrylat; Polyvinylidenfluorid/Polyethylacrylat; Polyphenylenoxid/o-Chlorstyrol-p-Chlorstyrol-Copolymere; Polystyrol/Polycarbonat des Tetramethylbisphenol-A; Polyvinylnitrat/Polymethylacrylat (D.R. Paul et al., loc.cit.) sowie für die Polymersysteme PVC/Poly- η-Hexylmethacrylat, PVC/Poly-n-butylacrylat, Poly-n-propylacrylat (D.J. Walsh and J.G. McKeown, Polymer 21, 1330-1334 (1980) sowie für chloriertes Polyethylen/Butylacrylat (D.J. Walsh et al., Makromol. Chem. 184, 1459-1468 (1983) und für PMMA/chloriertes Polyethylen (D.J. Walsh et al.. Polymer 23, 336-339 (1982).

Die Technik hat verschiedene Wege beschritten. um durch Anwendung von Wärme (oder von Energie. die sich leicht in Wärme umwandelt) optisch wahrnehmbare Information zu produzieren. ("Thermographie").

In der DE-A 20 30 652 wird eine Anzeigevorrichtung beschrieben, die aus einem festen Körper gebildet aus mindestens zwei Polymeren besteht die sich entwender in einem homogenen, durchsichtigen Zustand, in dem die Polymeren in fester Lösung vorhanden sind oder in einem heterogenen, translucenten Zustand, in dem die Polymeren als nicht mischbare Phasen vorhanden sind, befindet und die entsprechend dem aufzuzeigenden oder wiederzugebendem Muster aus dem einen in den anderen Zustand gebracht werden können.

In der DE-OS 23 28 900 wird ein thermographisches Kopiematerial beschrieben. Dabei bilden dünne Filme aus homogenen Polymerkomplexen von Protonendonor und -akzeptoreinheiten, die im Temperaturbereich 50 - 120°C dissoziierende Bindungen enthalten. ein thermisch latentes Bild. Das Bild kann durch Befeuchten bzw. Sprühen mit einer Farbstofflösung. einem Lösungsmittel oder einem Gas (Ammoniak) entwickelt werden.

Aus der DE-OS 30 42 331 ist ein thermographisches Aufzeichnungsmaterial bekannt, das eine nicht lichtempfindliche Silberverbindung in Verbindung mit einem schlagzähen Acrylharz enthält, die durch Erhitzen unter Lichtausschluß sensibilisiert wird.

Schichtförmiges, thermographisches Aufzeichnungsmaterial ist auch Gegenstand der JP-OS 75.128.528 (vgl. Chem.Abstr. 84, 128762b). Dabei werden sichtbare Abbildungen erhalten, wenn man auf das Schichtmaterial. Wärme oder andere Energieformen einwirken läßt, die sich leicht in Wärme umwandeln wie Licht.

Elektrizität. Auf einen Träger wird eine abbildende Schicht aus mindestens einem Fluorkohlenwasserstoff und einer Verbindung ausgewählt aus der Gruppe der Oxime, Betaine, Organometallverbindungen, Komplexverbindungen von Übergangsmetallen mit Aromaten, Guanidine und ihre Salze, Harnstoff, Thioharnstoff und deren Salze. Beispielhaft wird eine Dispersion eines flüssigen Acrylharzes eines polymeren Fluorkohlenwasserstoffs mit Isobutyroketon und Toluol und Acetaldoxim auf eine hochwertige Papierunterlage aufgebracht. Bei der Beschriftung mit einer auf 200° C erhitzten Feder erscheinen die beschrifteten Stellen schwarz.

Aus der US-PS 4 307 942 ist ein Apparat zur Verhinderung der Sonneneinstrahlung oberhalb einer vorgegebenen Temperatur bekannt, bestehend aus einer Schicht eines porösen Polymermaterials, einem Lösungsmittel und einer temperaturempfindlichen Substanz, mit der das poröse Material imprägniert ist und die eine negative Lösungsentropie im besagten Temperaturbereich hat.

Solche technische Anwendungen von Polymeren zur selbsttätigen Regulierung des Energiedurchtritts sind ganz vereinzelt. Lösungen individueller Polymerer, die unterhalt eines bestimmten Temperaturbereichs eine völlig transparente Lösung oder ein transparentes Gel bilden, aber oberhalb dieses Temperaturbereichs unter Ausfällung kleiner Festkörperpartikel reagieren, die einen Brechungsindex besitzen, der von dem der Lösung abweicht, so daß die Lösung gegenüber sichtbarem Licht um mindestens 50 % Durchlässigkeit verliert, werden in der US-PS 4 307 942 als nichtmechanische Sonnenblende empfohlen.

Wie bereits ausgeführt wurde, ist bisher eine verhältnismäßig geringe Zahl miteinander verträglicher Polymere bekannt. Einige dieser Mischsysteme zeigen die Erscheinung, daß beim Erwärmen ein Trübungspunkt auftritt; es wird also beim Erwärmen eine Temperatur erreicht, bei der diese Polymermischung wieder in zwei miteinander unverträgliche Polymersysteme zerfällt: Dieses Systeme zeigen eine untere kritische Lösungstemperatur (international: "lower critical solution temperature" = LCST).

Abb. 1   zeigt das Phasendiagramm solcher Polymermischungen mit unterer kritischer Lösungstemperatur

Abb. 1: Phasendiagramm von Polymermischungen mit unterer kritischer Lösungstemperatur (LCST)

#### Aufgabe

Verträgliche Polymermischungen, die eine LCST aufweisen, wurden bisher ausschließlich unter rein wissenschaftlichen Gesichtspunkten untersucht. Eine Nutzung des Phänomens zur Lösung definierter, technischer Aufgaben wurde bisher nicht vorgeschlagen. Dies mag auch darin begründet sein. daß die Trübungspunkte bisher bekannter verträglicher Polymermischungen mit LCST häufig erst bei sehr hoher Temperatur beobachtet wurden, die oft bereits eine Zersetzung der einzelnen Polymeren hervorrief.

So zeigt z.B. das System PMA/Polyvinylidenfluorid (PVDF) einen Trübungspunkt von ca. 300° C, Polyethylmethacrylat/PVDF einen Trübungspunkt von 240° C; PMMA/Styrol-Acrylnitrilcopolymeren hat einen Trübungspunkt bei 170° C, Polycarbonat/Polycaprolacton einen solchen bei 260° C.

Die Darstellung optisch wahrnehmbarer Information unter Einwirkung thermischer Energie beruhte bisher vorwiegend auf chemischen Umwandlungen oder auf der Ausnutzung von Phasenübergängen bei Flüssigkristallen.

EP 0 177 063 B1

Eine Darstellung optischer Information, die dadurch zustande kommt, daß ein optisch klarer Informationsträger in definierter Weise, z.B. in bestimmten geometrischen Bereichen, unter der Einwirkung thermischer Energie seine Transparenz verliert. z.B. weiß erscheint, stand der Technik bislang nicht zur Verfügung. Als besonders interessant mußte ein reversibler Übergang zwischen dem transparenten und dem trüben, d.h. weißen Zustand des Informationsträgers erscheinen.

Die vorliegende Erfindung betrifft ein Verfahren zur Aufzeichnung, Speicherung und Darstellung optisch ablesbarer Information auf einem Träger, unter Verwendung von Kunststoffmaterial, das unter der Einwirkung thermischer Energie oder einer unmittelbar in thermische Energie umwandelbaren Energieform in optisch differenzierbarer Weise modifiziert werden kann, wobei als Kunststoffmaterial eine Polymermischung P aus wenigstens zwei verschiedenen, miteinander verträglichen, im Temperaturbereich von 0 - 100 Grad C nicht in Wasser löslichen Polymeren P1 und P2 verwendet wird und die Modifikation in optisch differenzierbarer Weise durch den Phasenübergang von einer verträglichen Polymermischung unterhalb LCST zu entmischten Polymeren P1 und P2 oberhalb der LCST oder die Umkehrung dieses Übergangs bewirkt wird, mit der Maßgabe, daß der Übergang aus einem durch Polymerverträglichkeit gekennzeichneten Einphasengebiet in das durch Entmischung gekennzeichnete Zweiphasengebiet durch Temperaturerhöhung und Übergang in umgekehrter Richtung durch Temperaturerniedrigung herbeigeführt wird, dadurch gekennzeichnet, daß die Polymermischung P eine untere kritische Lösungstemperatur LCST unterhalb 140 Grad C besitzt.

Für die LCST gelten dabei die vorstehenden (vgl. Stand der Technik) wiedergegebenen Definitionen.

Bei dem Verfahren findet vorzugsweise unter dem Einfluß der Temperaturerhöhung ein Übergang aus einem durch Polymerverträglichkeit (z.B. optisch erkennbar an der Transparenz) gekennzeichneten Einphasengebiet in das durch Entmischung gekennzeichnete Zweiphasengebiet (optisch erkennbar an der Trübung bis Undurchsichtigkeit) statt, während der Übergang in umgekehrter Richtung durch Temperaturerniedrigung bewirkt wird. "Information" im Sinne der vorliegenden Erfindung stellt das optisch wahrnehmbare Resultat des Übergangs vom (transparenten) Einphasengebiet zum (nicht mehr transparenten) Zweiphasengebiet der Polymermischungen P und des umgekehrt verlaufenden Übergangs dar.

In der Regel beruht die optisch differenzierbare Modifizierung des Kunststoffsmaterials unter Energieeinwirkung darauf, daß sich die Brechungsindices der einzelnen Polymerkomponenten unterscheiden. Zweckmäßigerweise unterscheiden sich die Polymerkomponenten $P_1$ und $P_2$ der Polymermischung ($P_1$, $P_2$, gegebenenfalls $P_3$) in ihren Brechungsindices um mindestens den Wert 0,01, vorzugsweise um 0,03. (Die Bestimmung des Brechungsindex wird wie üblich vorgenommen). Vgl. Houben-Weyl, 4. Auflage, Bd. III/2, S. 407-424, G.Thieme Verlag, 1955. Besonders geeignet im Sinne der vorliegenden Erfindung sind Polymermischungen P mit LCST, deren LCST unterhalb 100° C, liegt. Für das Verfahren ist ferner vorteilhaft, wenn die Bedingung erfüllt ist, daß bei Temperaturerhöhung von einem Wert 10° C unter der LCST auf einen Wert 10° C oberhalb der LCST eine Reduzierung der Transmission um wenigstens 20 % erfolgt.

Die Bestimmung der Transmission soll dabei an einem 0,1 mm dicken nicht pigmentierten Probeplättchen vorgenommen werden. Die Bestimmung der Transmission erfolgt zweckmäßig nach DIN 5036 (vgl. Vieweg-Esser. Kunststoff-Handbuch. Band IX. Polymethacrylate, Hanser-Verlag, München. 1975, pg. 197ff).

Besonders bevorzugt soll die Transmission der Probe im Bereich von 10° C unterhalb der LCST bis mindestens 50° C unterhalb der LCST mehr als 80 % betragen, insbesondere soll die Reduzierung der Transmission von über 80 % auf weniger als 60 % in einem Temperaturintervall von < 10° C erfolgen. Ein weiterer Gesichtspunkt, der bei dem erfindungsgemäßen Verfahren von Bedeutung sein kann, ist die Geschwindigkeit der Informationseingabe, die der Geschwindigkeit der Temperaturänderung parallel verläuft. Die Eingabe der Temperatur soll derart erfolgen, daß sich die Temperatur des Polymersystems P um mehr als 1° C pro Sekunde, vorzugsweise um mehr als 10° C pro Sekunde, besonders bevorzugt um mehr als 10° C pro Zehntelsekunde ändert.

Anzustreben ist weiter, daß oberhalb der LCST, d.h. in der entmischten Form, zwei Polymerphasen (aus $P_1$ und $P_2$ bzw. $P_3$) nebeneinander vorliegen, von denen wenigstens eine Polymerphase eine Domänengröße im Bereich von 10 $nm^2$ bis $10^8$ $nm^2$, vorzugsweise $10^2$ nm bis $10^6$ $nm^2$ aufweist, wobei sich die Polymerphasen in ihren Brechungsindices um wenigstens 0,01 unterscheiden.

Von der materiellen Zusammensetzung her ist es vorteilhaft, wenn die Glastemperatur Tg der verträglichen Polymermischung P unterhalb von 150° C liegt. (Zur Bestimmung der Tg vgl. D.R. Paul & S. Newman. Polymer Blends, Vol.I. Chap.5. Academic Press, New York., 1978). Vorzugsweise soll die Glastemperatur der verträglichen Polymermischung unterhalb 100° C, besonders bevorzugt unter 50° C liegen.

Die Auswahl im Hinblick auf die exakte Lage der LCST und der Glastemperatur Tg hängt in erster Linie von der angestrebten Verwendung der Polymermischungen ab.

So wird man naturgemäß beim Einsatz der Polymermischungen mit LCST in einer Anzeigetafel oder aber in eins Fernsehschirm - wo eine schnelle, reversible Änderung der eingegebenen Information (Eintrübung beim Phasenübergang T < LCST zu T > LCST) erforderlich ist, darauf achten, daß eine sehr große Beweglichkeit der Polymerketten an der LCST gegeben ist, daß auch die Glastemperatur der Polymermischung P unterhalb von 50°C, bevorzugt unterhalb von 0°C und besonders bevorzugt unterhalb von -50°C liegt.

Weiterhin muß darauf geachtet werden, daß die Glastemperatur wenigstens 50°C, bevorzugt wenigstens 100°C unterhalb der LCST der Polymermischung liegt.

In der Regel kann die Glastemperatur der Polymermischung P und die Glastemperatur der Polymeren $P_1$ und $P_2$ durch Zusatz von niedermolekularen Substanzen W (Weichmacher, Lösungsmittel) erniedrigt werden. Auf diesem Wege läßt sich in einfacher Weise eine gute Beweglichkeit der Polymerketten und damit ein schneller, reversibler Phasenübergang an der LCST erzielen.

Darüber hinaus kann die Polymerkette auch durch Copolymerisation mit einem weich machenden Comonomeren weichgemacht werden ( = innere Weichmachung. Der Einfluß spezifischer Monomerer auf die Härte eines Polymerisats ausgedrückt durch die Glastemperatur Tg oder die dynamische Einfriertemperatur nach DIN 7724, läßt sich anhand von Vieweg-Esser, Kunststoff-Handbuch, Band IX, pg. 333-340, Carl Hanser-Verlag, 1975, und von Brandrup-Immergut, Polymer Handbook, 2nd. Ed.Wiley-Interscience, 1975 abschätzen). * Diese Form der Erhöhung der Polymerbeweglichkeit bietet gegenüber dem Zusatz von niedermolekularen Substanzen als Weichmacher den Vorteil, daß der Weichmacher an das Polymere angebunden ist und somit nicht auswandern kann..

Anders stellen sich die Anforderungen hinsichtlich Glastemperaturen und LCST dar, wenn Polymermischungen mit LCST zur langfristigen Speicherungen von Information verwendet werden sollen. Hier ist ein schnell reversibel auftretender Übergang häufig unerwünscht.

Oftmals ist es gerade das Ziel, eine Information irreversibel zu speichern. Die irreversible Aufzeichnung von Informationen ist mit Polymermischungen mit LCST in besonders einfacher Weise möglich. In der Regel wird die Information dabei durch Temperaturerhöhung über die LCST eingeschrieben (Übergang von dem transparenten, verträglichen Ein-Phasengebiet < LCST zu dem unverträglichen Zwei-Phasengebiet > LCST).

Man wird dabei von einer deutlich über Raumtemperatur liegenden LCST (z.B. LCST > 50°C oder besser LCST > 80°C) ausgehen und darauf achten, daß die Glastemperatur der Polymermischung P und/oder wenigstens eines der die Polymermischung aufbauenden Polymeren höchstens 100°C unterhalb der LCST liegt.

Insbesondere wird man bei einem Einsatz von Polymermischungen zur irreversiblen Speicherung von Informationen den Weichmacheranteil (Lösungsmittelanteil W) der Polymermischung auf höchstens 100 Gew.-% (bezogen auf den Polymergehalt der Mischung) begrenzen. Besonders bevorzugt sind Systeme mit weniger als 50 Gew.-% Weichmacher (Lösungsmittel).

Besonders beim Einsatz der Polymermischung ohne zusätzliches Trägermaterial ist eine Polymermischung P mit möglichst geringem Weichmacheranteil von Interesse.

Es sei an dieser Stelle bereits darauf hingewiesen. daß die Materialien zur irreversiblen Speicherung von Informationen naturgemäß unterhalb der LCST verarbeitet werden müssen. z.B. durch Extrusion der Masse bei Temperaturen < LCST oder durch Ausziehen eines Films aus Lösungsmitteln oder durch Polymerisation der Monomeren zu Polymeren $P_2$ in Gegenwart von Polymer $P_1$. Ganz generell muß aber bei Polymersystemen P mit einem irreversiblen Übergang unterhalb LCST gearbeitet werden.

Zwischen den zuletzt beschriebenen Systemen zur irreversiblen Speicherung von Information und den davor dargestellten Systemen zur schnellen Informationsdarstellung in Anzeigetafeln liegen Systeme zur reversiblen Informationsspeicherung. Während für Systeme zur schnellen Informationsdarstellung gilt: Bevorzugung sehr großer Abstände von LCST zu Tg (in der Regel wenigstens 100°C), durch Copolymerisation oder durch Zusatz niedermolekularer Substanzen stark weichgemachter und damit gut beweglicher Polymerketten, gilt für Systeme zur irreversiblen Speicherung von Informationen: geringer Weichmacheranteil, geringer Abstand von LCST zur Tg von wenigstens einer Polymerkomponente und relativ hohe LCST.

Bei Systemen zur reversiblen Informationsspeicherung soll die Information (d.h. der Übergang aus dem klaren Ein-Phasengebiet bei T < LCST zum trüben Zwei-Phasengebiet bei T > LCST) zunächst eingefroren werden, d.h. das trübe Zwei-Phasengebiet soll auch nach Abkühlung unter die LCST erhalten bleiben, daneben soll aber die Möglichkeit bestehen, die eingegebene Information zu einem späteren Zeitpunkt wieder zu löschen. In der Regel ist ein solches System in einfacher Weise durch eine hohe Abkühlgeschwindigkeit nach dem Einschreiben der Information (Abkühlgeschwindigkeit z.B. > /-10°C/sec) (=

---

* Als "weichmachende" Comonomere seien allgemein solche verstanden, deren Homopolymerisate eine Tg < 20°C aufweisen.

5

Einfrieren der Information) einstellbar. Das Löschen der Information erfolgt dagegen durch Tempern (z.B. 10 Minuten) bei Temperaturen knapp unterhalb der LCST (z.B. LCST - 10° C). Die Glastemperatur sollte in diesem Fall im Bereich von 50 - 150° C unterhalb der LCST liegen. Für die LCST gilt im allgemeinen: LCST > 50° C.

Der Polymermischung, aus mindestens zwei verschiedenen Polymeren, kann - wie bereits ausgeführt - gegebenenfalls noch eine oder mehrere niedermolekulare organische Substanzen W beigefügt sein.

Zweckmäßigerweise hat die niedermolekulare Substanz W die Eigenschaft für wenigstens eines der beiden Polymeren $P_1$ und $P_2$ ein Solvenz zu sein.

Weiter weist die niedermolekulare Substanz W vorteilhaft einen von den Polymeren $P_1$. $P_2$ oder weiteren im System P vorhandenen Polymeren abweichenden Brechungsindex auf. Dadurch ergibt sich die Möglichkeit, daß auch bei nur geringfügigem Unterschied im Brechungsindex von $P_1$ und $P_2$ wegen der Ungleichverteilung der niedermolekularen Substanz W zwischen den beiden unverträglichen Polymeren eine Lichtstreuung hervorgerufen wird.

Dabei muß jedoch berücksichtigt werden, daß jede Asymmetrie in der Polymer-Lösungsmittel-Wechselwirkung in einem ternären System Polymer 1 / Polymer 2 / Lösungsmittel Weine Phasentrennung hervorrufen kann. Man wird daher im allgemeinen solche Lösungsmittel verwenden, die eine geringe Asymmetrie in der Polymer-Lösungsmittel-Wechselwirnnng aufweisen.

In der Regel ist die niedermolekulare Substanz W eine organische Substanz, d.h. nicht Wasser. Vorzugsweise gehören die niedermolekularen Substanzen W der Gruppe der Weichmacher und/oder Lösungsmittel für Polymere an. (Vgl. H. Gnamm, O. Fuchs, Lösungsmittel und Weichmachungsmittel, 8. Auflage, Bd. I & II, Wissenschaftliche Verlagsgesellschaft mbH, Stuttgart, 1980). Vorteilhafterweise besitzen die niedermolekularen organischen Substanzen W einen Festpunkt unterhalb 10° C; günstig ist, wenn der Festpunkt wenigstens 50° C unterhalb der LCST des Polymersystems $P_1$ und $P_2$ usw. liegt.

Im allgemeinen beträgt der Gehalt an den niedermolekularen organischen Substanzen W 0,1 bis 1000 Gew.-%, vorzugsweise 5 - 300 Gew.-%, bezogen auf das Gewicht der Polymeren $P_1$ und $P_2$.

## Die Polymermischung P

Die Polymermischung P besteht definitionsgemäß aus wenigstens zwei Polymerkomponenten $P_1$ und $P_2$. Die Polymerkomponenten $P_1$ und $P_2$ sind strukturell verschieden und zwar von einer solchen komplementären Unähnlichkeit, daß energische Wechselwirkung zwischen den Polymeren $P_1$ und $P_2$ begünstigt wird. Die Mischungsenthalpie für die beiden Polymerkomponenten $P_1$ und $P_2$ ist also exotherm. Die Mischbarkeit der beiden Polymeren $P_1$ und $P_2$ beruht demzufolge nach gegenwärtigen Erkenntnissen auf der exothermen Wechselwirkung der einzelnen Segmentpaare.

Diese Wechselwirkung kann unterschiedliche Mechanismen einschließen. so z.B. Salzbildung, Wasserstoffbrückenbindungen, Komplexbildung, Kopplung von Phenylgruppen, dipolare Wechselwirkungen. Dabei genügt es in der Regel, daß die Mischungsenthalpie der Polymerkomponenten $P_1$ und $P_2$ nur geringfügig negativ ist. Mit diesen Voraussetzungen können die z.Zt. bekannten verträglichen Polymermischungen verstanden werden und neue verträgliche Polymerpaare aufgefunden werden. (Vgl. D.R. Paul et al., J. Macromol. Sc. - Rev. Macromol. Chem.C. 18, (1) 109-168 (1980).

Die Wechselwirkung der Polymeren sollte nicht so stark sein, daß die Entmischung der verträglichen Polymermischung in die Polymerkomponente $P_1$ und $P_2$ beispielsweise erst bei sehr hohen Temperaturen, z.B. bei 300° C erfolgt, wie z.B. in dem Polymersystem PVDF/PMMA der Fall ist.

Ganz allgemein sollte für den erfindungsgemäßen Einsatz der Polymermischungen die LCST nicht so hoch liegen, daß bei der LCST eine chemische Veränderung bei mehr als 1 % der Monomerbausteine/Stunde erfolgt.

Eine relativ niedrige LCST läßt sich z.B. mit einem großen Anteil schwach wechselwirkender Gruppen/Polymermolekül oder mit einem geringeren Anteil stärker wechselwirkender Gruppen erreichen. In der Regel ist ein hoher Anteil schwach wechselwirkender Gruppen (z.B. schwache Dipol-Dipol-Wechselwirkungen) bevorzugt.

Definitionsgemäß soll eines der beiden Polymerisate $P_1$ oder $P_2$ im Temperaturbereich von 0 bis 100° C in Wasser löslich, sein. (Die Löslichkeit der Polymeren in Lösungsmitteln ist meist als kooperativer Effekt zu beschreiben, d.h. es liegt Löslichkeit von wenigstens 50 g/l vor oder es werden im anderen Falle nur vernachlässigbar geringe Mengen gelöst. Der erstere Fall sei als "löslich im Lösungsmittel L" betrachtet).

Vorteilhafterweise soll die Differenz zwischen der LCST und der Glastemperatur Tg der Polymermischung mindestens 20° C betragen. Weiter ist vorteilhaft, wenn die Glastemperatur der Polymermischung P um wenigstens 50° C, vorzugsweise wenigstens 100° C, unterhalb der LCST liegt. Über die genaue Lage der Glastemperatur in Relation zur LCST gilt die vorgenannte Ausführung, d.h. die Glastemperatur wird bei Systemen zur Informationsspeicherung höher liegen als bei Systemen zur Informationsübermittlung in Anzeigetafeln.

Die Polymermischung P ist aus mindestens zwei chemisch verschiedenen Polymeren $P_1$ und $P_2$ aufgebaut. Wenigstens eines der beiden Polymeren soll vorteilhafterweise einen Kohlenstoffgehalt von < 80 % aufweisen.

Weiter ist bevorzugt, daß wenigstens eines der beiden Polymere zu mindestens 5 Gew.-% (bezogen auf das Polymerisat $P_1$ bzw. $P_2$) eine Gruppe mit einer vom Kohlenstoff ausgehenden Doppel- oder Dreifachbindung aufweist. Genannt seien z.B. die

$$- \overset{|}{C} = \overset{|}{C} -$$

bzw. die

$$\diagup C = O,$$

die - C≡N, die - C≡C -, die

$$\diagup C = N -,$$

die

$$\diagup C = S$$

-Gruppe. Bevorzugt enthält wenigstens eines der Polymerisate $P_1$ oder $P_2$ kovalent gebundenes Halogen, insbesondere Fluor, Chlor oder Brom, vorteilhafterweise in Anteilen von 10 Gew.-% und/oder Chalkogen, insbesondere Sauerstoff und/oder Schwefel, vorteilhaft in Anteilen von > 10 Gew.-%.

Zweckmäßig beträgt das Verhältnis des Halogengehalts (in Gew.-%) des Polymeren $P_1$ zum Halogengehalt des Polymeren $P_2$ > 1,5 : 1, vorzugsweise > 2 : 1. Das Verhältnis des Sauerstoffgehalts des Polymeren $P_1$ zum Sauerstoffgehalt des Polymeren $P_2$ soll vorteilhafterweise > 1,2 : 1, vorzugsweise > 1,5 : 1 betragen.

Weiter soll vorteilhafterweise wenigstens eines der die Polymermischung P bildenden Polymeren ein Copolymerisat sein, bei dem das als hauptsächlicher Bestandteil vorhandene Monomere höchstens 95 Gew.-% ausmacht.

Es ist ferner von Vorteil, wenn die Polymermischung P **unterhalb** der LCST, im gesamten Bereich von Raumtemperatur (25 °C) bis zur LCST selbst eine einzige Glastemperatur Tg aufweist und keine kristallinen Bereiche enthält.

Zweckmäßigerweise sollten die Polymerkomponenten der Polymermischung P so aufgebaut sein, daß keine der Polymere $P_1$ oder $P_2$ (bzw. weitere anwesenden Polymerer) bei der Temperatur der LCST eine chemische Veränderung erfährt, die 1 %/Stunde übersteigt (bezogen auf die betroffenen Monomerbausteine).

Die Stabilität der Polymerkomponenten kann in an sich bekannter Weise durch Zusatz von UV-Schutzmitteln, Antioxidantien, Alterungs- bzw. Witterungsschutzmitteln u.ä. (vgl. Ullmanns Encyklopädie der techn. Chemie, 4. Auflage, Bd. 15, Verlag Chemie, pp. 255folg.), erhöht werden. Ihr Anteil liegt im allgemeinen bei 0,01 bis 5 Gew.-%, vorzugsweise bei 0,1 bis 1 Gew.-%, bezogen auf die Polymermischung P. Genannt seien insbesondere sterisch gehinderte Phenole, Phosphite, Thioether, sterisch gehinderte Amine, Benzophenone, Benztriazol, Oxalanilide.

'Im allgemeinen soll das mittlere Molekulargewicht (Gewichtsmittel $\overline{M}_w$) mindestens eines der beiden Polymeren $P_1$ oder $P_2$ mindestens 2000 betragen, vorzugsweise mindestens 10 000, vorzugsweise sollen beide Polymeren $P_1$ und $P_2$ ein Molekulargewicht von wenigstens 2 000 besitzen. (Die Bestimmung des Molekulargewichts wird in bekannter Weise durch Lichtstreuung vorgenommen, vgl. Houben-Weyl). Vorteilhaft weist wenigstens eines der Polymeren ein mittleres Molekulargewicht $\overline{M}_w$ im Bereich 2 000 bis 500 000, vorzugsweise 10 000 bis 500 000 auf, günstig ist es, wenn beide Polymere $P_1$ und $P_2$ mittlere Molekulargewichte im Bereich von 2 000 bis 500 000, vorzugsweise 10 000 bis 500 000 aufweisen.

Besonders interessante Systeme liegen auch dann vor, wenn die beteiligten Polymerisate beispielswei-

se $P_1$ mit $P_2$ zum Teil kovalent verbunden sind. Solche kovalenten Verknüpfungen können beispielsweise durch den Charakter der Polymeren als Blockpolymere oder durch Pfropfung erreicht werden. Dabei sollen die im folgenden angegebenen Mischungsverhältnisse berücksichtigt werden. Häufig ist es schon ausreichend, wenn ein Polymeres z.B. $P_2$ in Gegenwart des anderen Polymeren (z.B. $P_1$) durch Polymerisation erzeugt wird.

Die Durchführung der Block- bzw. der Pfropfpolymerisation kann in Anlehnung an die Verfahren des Standes der Technik durchgeführt werden. Bezüglich Einzelheiten der Herstellung von Block- und Pfropfcopolymerisaten sei auf die einschlägige Literatur verwiesen, z.B. Houben-Weyl, Methoden der Org. Chemie, 14/1, S. 110 ff., Block Copolymers, D.C. Allport, W.H. Janes, Appl. Sci. Publishers, Ltd. London, 1973; Graft Copolymers; H.A.J. Battaerd, G.W. Tregear, Polymer Reviews. Vol. 16 (1967); Block und Graft Polymers, W.J. Burlant, A.S. Hoffmann, Reinhold Publishers Corp., New York, 1960.

Als Richtwerte für das Mischungsverhältnis im Polymersystem P können gelten: Ein Gewichtsverhältnis der Polymeren $P_1$ zu $P_2$ im Bereich 98 : 2 bis 2 : 98, vorzugsweise 90 : 10 bis 10 : 90, insbesondere 80 : 20 bis 20 : 80. Die Polymermischung P kann farblos sein, sie kann aber auch eingefärbt sein.

In der Regel dient die Zugabe des Farbstoffs dazu, den Kontrast beim Übergang vom Ein-Phasengebiet (T < LCST) ins Zwei-Phasengebiet (T > LCST) - und umgekehrt - zu erhöhen.

Zum Einfärben wird vorzugsweise ein in dem System löslicher Farbstoff der an sich bekannten Typen oder ein Pigmentfarbstoff mit diskreten Pigmentteilchen verwendet. Im letzteren Falle soll der Durchmesser der Pigmentteilchen zweckmäßig höchstens 50 % des im Durchschnitt auftretenden Durchmessers, der bei der Entmischung der Polymeren $P_1$ und $P_2$ gebildeten Polymerphasendomänen ausmachen: Farbstoffe und Pigmente der geeigneten Art können beispielsweise Ullmanns Encyklopädie, 4. Auflage, Band 15, loc.cit., S. 275 bis 280 (1978) entnommen werden.

Der Gehalt an Farbmitteln liegt in den üblichen Bereichen, beispielsweis zwischen 0,01 und 10 Gew.-%, bezogen auf die Polymermischung P.

Die Polymermischung P kann in verschiedenen Formen technisch angewendet werden.

Zunächst ist die Anwendung der Polymermischung P unmittelbar und ohne eine von der Polymermischung P unterscheidbare Trägergrundlage möglich. Für diese Art der Anwendung ist günstig, wenn die Tg der Polymermischung P oberhalb von 20°C, besser oberhalb von 50°C liegt. Insbesondere wird die Anwendung der Polymermischung P unmittelbar und ohne eine von der Polymermischung P unterscheibare Trägergrundlage im Bereich der Informationsspeicherung - besonders im Bereich der irreversiblen Informationsspeicherung - zur Anwendung kommen. Die Polymermischung P hat in diesem Fall z.B. die geometrische Form einer Scheibe, eines Bandes oder eines Fadens.

Eine weitere Anwendungsform der Polymermischung P besteht darin, daß eine Trägergrundlage verwendet wird. In der Mehrzahl der Fälle wird die Polymermischung P mehr oder weniger haftend auf der Trägergrundlage aufgezogen sein. Auch eine doppelseitige Beschichtung einer Trägergrundlage ist möglich.

Ein dritter Fall liegt vor. wenn die Polymermischung P sich zwischen einer Trägerschicht und einer Deckschicht befindet. Dabei können die Träger- und die Deckschicht identisch sein. In der Regel wird die Trägergrundlage aus einem transparenten Material bestehen, ebenso die Deckschicht. In der Regel werden Trägergrundlage und Deckschicht aus dem gleichen Material sein und dieselben Abmessungen besitzen. Aus praktischen Erwägungen sollte das als Trägergrundlage verwendete Material eine Glastemperatur Tg von > 50°C aufweisen. Werden Trägermaterialien mit einer Glastemperatur Tg < 50°C verwendet, so sollten diese vernetzt sein.

Die Temperaturbeständigkeit soll derart sein, daß sie nicht mit der thermischen Behandlung der Polymermischung P interferiert, d.h. sie wird in der Regel um mindestens 30°C höher sein als die LCST des Systems.

Als Trägergrundlage bietet sich transparentes anorganisches Material, z.B. Mineralglas, an, wie Silikatglas oder die infrarotdurchlässigen Gläser auf der Basis der Sulfide.

Selenide oder Telluride von Arsen oder Antimon (Chalogenidgläser), die zwar im sichtbaren Spektralbereich stark absorbieren, im infraroten jedoch bis 10 vm durchlässig sind. Alternativ kann die Trägergrundlage auch aus einem lichtreflektierenden Material, z.B. einem Metall bzw. einer metallisierten Oberfläche (Spiegel) bestehen.

Besonderes Interesse kann der Fall der zwischen Träger- und Deckschicht (die meistens nicht verschieden sind) eingebetteten Polymermischungen P erwecken. Die Einbettung der Polymermischung P zwischen eine Träger- und eine Deckschicht ist besonders bei einer Polymermischung P mit einer Glastemperatur Tg < -50°C von Interesse und hier wieder besonders im Bereich der Lösungsmittel- und/oder Weichmacher enthaltenden Polymermischungen. Insgesamt gestattet die Einbettung zwischen Träger- und Deckschicht die Verwendung von sehr leicht beweglichen - und damit auch sehr schnell schaltbaren Polymermischungen. Die Einbettung der Polymermischung P zwischen eine Träger- und eine Deckschicht wird daher insbesonders bei schnell schaltbaren Anzeigetafeln. bei Fernsehschirmen und ähnlichen Systemen verwendet werden.

Die geometrische Form der Polymermischungen P unterliegt im allgemeinen keinen materialspezifischen Limitierungen. Bei der Verwendung einer Trägergrundlage bzw. bei Einbettung wird die geometrische Form die die Polymermischungen annehmen, in der Regel durch die Form der Trägergrundlage und gegebenenfalls der Deckschicht bestimmt.

Die Polymermischung P wird, für sich oder auf einer Trägergrundlage oder in Einbettung beispielsweise in Form einer Platte, Scheibe, Folie oder als ein - gegebenenfalls flexibles - Band vorliegen.

Die Trägergrundlage bzw. Deckschicht kann in zweckmäßiger Weise eingefärbt sein, sie kann dadurch z.B. die Funktion eines Filters für eingestrahltes Licht übernehmen.

Die Polymermischungen P können auch in einem (transparenten) Werkstoff eingelagert sein, dessen Brechungsindex mit dem Brechungsindex der Polymermischungen P unterhalb des LCST übereinstimmt. Vorteilhafterweise weist der zur Einlagerung verwendete Werkstoff eine Glastemperatur von > 50° C auf. Die zur Einlagerung geeigneten Werkstoffe können beispielsweise aus den Gruppen der oben genannten, als Trägergrundlage geeigneten Polymeren ausgewählt sein. In bestimmten Anwendungsgebieten, speziell bei der optischen Anzeige ist es vorteilhaft. das ganze System (Polymermischung P plus gegebenenfalls Trägergrundlage, Deckschicht usw.) auf eine Arbeitstemperatur knapp z.B. ca. 2 bis 20° C unterhalb des Trübungspunktes zu erwärmen. um somit eine möglichst geringe Trägheit des Anzeigesystems zu gewährleisten. Es ist folglich auch ratsam. die Wärmekapazität des ganzen Systems möglichst gering zu halten, also möglichst **dünne** Informationsträger, wie Platten, Folien, Bänder usw. einzusetzen, um damit eine schnelle Schaltung zu ermöglichen. Die (minimale) Dicke der Polymermischungen P als solche und in ihren verschiedenen Konfigurationen wird einerseits durch die zu fordernde Kohärenz der Schicht, andererseits durch den optisch/meßtechnisch zu fordernden ausreichenden Unterschied in der Transmission oberhalb und unterhalb der LCST determiniert.

In vielen Fällen wird es genügen, die Polymermischungen P in einer Schichtdicke von 0,0001 bis ≦ 1 mm vorzugsweise < 0,1 mm, speziell < 0,01 mm anzuwenden, wobei die Polymermischung P sich auf einer Trägergrundlage befinden oder eingelagert sein oder ohne Trägergrundlage angewendet werden kann. Besonders interessant ist der Fall einer Einlagerung der Polymermischungen P in einen Werkstoff, dessen Brechungsindex mit dem Brechungsindex der Polymermischung unterhalb der LCST übereinstimmt und der somit eine Matrix M bildet. Während im allgemeinen die Änderung der Transmission der Polymermischung P unterhalb und oberhalb der LCST zur Speicherung, Aufzeichnung und Darstellung von Information verwendet wird, ist es besonders im Falle der Einbettung der Polymermischung P zwischen einer Träger- und einer Deckschicht auch möglich, die Änderung der Intensität des Lichtes in einem Winkel (z.B. 90°) zum eingestrahlten Licht bei T < LCST und T > LCST zur Darstellung und Übertragung von Information auszunutzen.

Besonders interessant sind solche Systeme, bei denen die Polymermischung P in einem als Matrix dienenden Werkstoff M in Form diskreter Teilchen von einem Durchmesser im Bereich 20 nm bis 200 μm, bevorzugt 50 nm bis 50 μm, eingelagert ist. Die Bestimmung der Teilchengröße kann licht- bzw. elektronenmikroskopisch vorgenommen werden. *

Besonders bevorzugt sind dabei Teilchen mit einem Durchmesser im Bereich von 50 nm bis 5 μm. Dabei ist es möglich, diese feinen Teilchen durch Emulsionspolymerisation wenigstens einer der Polymerkomponenten $P_1$ oder $P_2$ herzustellen. Von besonderem Interesse ist die Herstellung der Polymerkomponente $P_1$ und $P_2$ der Polymermischung P in einem wenigstens zwei Stufen umfassenden Emulsionspolymerisationsverfahren. Besonders bevorzugt wird dabei so verfahren, daß ein weitgehend aus der Polymerkomponente $P_1$ aufgebautes Latex als Saatlatex für die Emulsionspolymerisation der Polymerkompo nente $P_2$ dient. Weiter kann es von Vorteil sein, den genannten, die Polymerkomponente $P_1$ und/oder $P_2$ enthaltenden Latex als Saatlatex für die Emulsionspolymerisation einer Polymerkomponente PM zu verwenden, wobei unter PM ein Polymerisat zu verstehen ist, das mit der Matrix M verträglich ist oder besonders bevorzugt chemisch mit der Matrix M übereinstimmt. Dieser Anteil PM dient der Verankerung des Polymerisates P und der Matrix M. In der Regel wird die Matrix M mit keiner die Polymermischung P aufbauenden Polymerkomponente $P_1$ und $P_2$ eine verträgliche Polymermischung eingehen.

Weiterhin gilt in der Regel bei Einlagerung der Polymermischung P in Teilchenform in einer Matrix M, daß die Polymermischung P unterhalb der LCST in Bezug auf ihren Brechungsindex mit der Matrix M weitgehend übereinstimmt ($\Delta n$ in der Regel < 0.01). Darüber hinaus gilt im allgemeinen

* (Vgl. Kirk-Othmer. 3rd.Ed. Vol. 21. J. Wiley. 1983. pg. 115-117 und Houben-Weyl, 4. Auflage, Bd. XIV/1, pg. 365-372. Georg Thieme Verlag, Stuttgart, 1961.

$n_{DMatrix} > n_{DPolymerisat\ 1}$ ($\Delta n > 0,01$) in Verbindung mit

$n_{DMatrix} < n_{DPolymerisat\ 2}$ ($\Delta n > 0,01$).

Im übrigen soll vorteilhafterweise das als Träger verwendete Material die Bedingung Brechungsindex $n_{DTräger} \approx n_{DPolymermischung P}$ erfüllen.

Weiter ist nützlich, wenn das Trägermaterial die Bedingung erfüllt $n_{DTräger} < n_{DPolymermischung P}$, wobei ferner gilt

$$n_{DTräger} > n_{DPolymerisat\ P_1} \quad \text{und} \quad n_{DTräger} < n_{DPolymerisat\ P_2}.$$

Dies sind z.B. Anzeigetafeln, die einen Lichteintritt in der Tafelebene aufweisen, wobei Lichtaustritt aus der Anzeigentafelebene nur an Punkten mit T > LCST erfolgt. Dabei soll der zur Einlagerung verwendete Werkstoff vorteilhaft eine Glastemperatur $T_g$ von > 50°C besitzen. Bei derartigen Anzeigetafeln mit einem Lichteintritt in der Tafelebene ist es bevorzugt, daß die Anzeigetafel auf der Vorderseite mit phosphoreszierenden Substanzen beschichtet ist.

Von besonderem Interesse ist schließlich die Konfiguration, daß die Polymermischung P in einer Schichtdicke von < 0,1 mm, speziell < 0,01 mm, auf einer Trägergrundlage oder eingebettet zwischen Trägergrundlage und Deckschicht vorliegt.

Die Dicke der Trägergrundlage wird in gewissen Grenzen durch die Wahl des Materials mitbestimmt. Sie liegt im allgemeinen bei 1 um bis 10 mm, vorzugsweise 5 $\mu$m bis 0,5 mm. Anzustreben ist, wenn nicht aus der Polymermischung P bestehende Schichten zur Anwendung kommen, also bei Einbettung in eine Matrix oder bei Einlagerung zwischen eine Trägergrundlage und einer Deckschicht, daß wenigstens eine dieser unterstützenden bzw. deckenden Schichten eine Dicke von 0,5 mm nicht überschreitet.

Eine weitere technische Möglichkeit liegt in der Verwendung der Polymermischungen P in Gestalt eines Fadens.

Im Falle der Gestaltung als Faden kann z.B. die Polymermischung P den Kern des Fadens bilden, während die Umhüllung als "Trägergrundlage" fungiert.

Im letztgenannten Fall ist es günstig, wenn sich die Brechungsindices wie folgt verhalten:

$$n_D\ \text{Umhüllung} > n_D\ \text{Polymer}\ P_1\ \text{bzw.}\ P_2 \quad \text{und}$$

$n_D$ Umhüllung < $n_D$ Polymermischung P.

Der beschriebene Faden dient als Lichtleiter mit der Möglichkeit die Lichtleitung durch Temperaturänderung (Erhöhung der T zu T > LCST oder Erniedrigung der Temperatur von T > LCST zu T < LCST) zu ändern.

Die optisch ablesbare Information gemäß der vorliegenden Erfindung basiert auf der Verwendung der Polymerischung P in den verschiedenen angegebenen Konfigurationen. Die Information wird durch Trübung infolge Erreichung bzw. Überschreitung der LCST manifest. Es bietet sich somit eine weite Skala einerseits zur Ausgestaltung der Information, andererseits zu deren Anwendung an. Bei der Durchführung des Verfahrens wird - wie bereits erwähnt - zweckmäßigerweise die Polymermischung P bzw. das gesamte, die Polymermischung P enthaltende System, das z.B. Trägergrundlage, Deckschicht oder Matrix umfaßt, auf einer Betriebstemperatur gehalten, die weniger als 20°C, vorzugsweise weniger als 5°C unterhalb der LCST liegt. Die Polymermischung P bzw. das sie enthaltende System, sind in diesem Zustand zur Aufgabe der Information bereit.

Die Polymermischung P in ihren verschiedenen Konfigurationen kann z.B. als Informationsspeicher verwendet werden. Dabei gilt vorteilhaft, daß die bei Wärmezufuhr erzeugte Trübung durch Entmischung in den dafür vorgesehenen Bezirken soweit konstant bleibt, daß innerhalb von einer Woche keine Änderung der Transmission um mehr als 5 % (bezogen auf die Transmission nach Einfrieren der zuvor über LCST erwärmten Probe) eintritt.

Es ist z.B. möglich, wie bereits ausgeführt, die aufgegebene Information dadurch zu fixieren, daß man den Informationsspeicher mit einer Temperaturabnahme von mehr als 10°C pro Sekunde einfriert. Umgekehrt läßt sich die als Trübung vorhandene Information z.B. dadurch wieder löschen, daß man erwärmt, beispielsweise über eine Stunde bei 5°C unterhalb der LCST.

Eine interessante Möglichkeit der Durchführung des Verfahrens besteht z.B. darin, die Information digital einzulesen. Wie bereits aufgezeigt, kann die Information sowohl als statische oder als variable Größe produziert werden.

Ein wichtiger Anwendungsbereich des erfindungsgemäßen Verfahrens erstreckt sich auf die Datenerfassung. Die zum Ausdrücken der Information zur Verfügung stehenden Informationseinheiten bestehen aus geometrisch begrenzten, durch ihre Lichtdurchlässigkeit unterschiedenen Elementen, so daß die Möglichkeit besteht, binäre Ziffern darzustellen (z.B. ein bit = "lichtdurchlässig", das andere bit = nicht durchlässig"). Das Abtasten der Informationsträger kann durch auf Helligkeitsunterschiede ansprechende Vorrichtungen, beispielsweise mittels einer Photozelle vorgenommen werden. (Vgl. "Lesen der Information").

Weitere Anwendungsfelder bestehen auf dem Gebiet der Kommunikation und der Werbung. In einfacher Weise können beispielsweise auf einer Anzeigetafel Symbole wie Schriftzüge, Daten u.ä. hergestellt werden. Wenn die im weiteren beschriebenen schnell reversiblen Polymersysteme eingesetzt werden. können z.B. damit günstig großflächige Anzeigetafeln oder "bewegte" Leuchtreklame betrieben werden.

Eine wünschenswerte Voraussetzung für die Verwendung bei Anzeigetafeln ist. daß die Information (die auf Erhöhung oder Erniedrigung der Trübung beruht) mit einer Geschwindigkeit von $\Delta$ Transmission/sec = > 1 % ( $\Delta$ Transmission ist prozentuale Änderung der Transmission in der Zeiteinheit) eingegeben werden kann. Für diesen Anwendungszweck sollte zweckmäßig die Abklingzeit der Information der Bedingung folgen:

$\Delta$ Transmission/min = > 10 %, vorzugsweise $\Delta$ Transmission = > 10 %/sec. In vielen Anwendungsbereichen ist es erwünscht, die Energiezufuhr an die Polymermischung P so steuern zu können, daß sie eine präzise, räumlich/zeitliche Kontrolle der hervorgerufenen Modifikation im Sinne der Erfindung bewirkt. Die räumliche und die zeitliche Verteilung der Energiezufuhr kann unter Zuhilfenahme der einschlägigen Vorrichtungen der Technik auf elektrischem oder optischem Wege gesteuert werden.

In unmittelbarer Weise kann die Information durch Wärme abgebende Elemente, d.h. Heizelemente, eingegeben werden. Vorteilhafterweise sind die Heizelemente so ausgelegt, daß die Energiezufuhr bzw. Energieabgabe räumlich und/oder zeitlich kontrolliert verändert, d.h. gesteuert werden kann. Auf diese Weise lassen sich z.B. Schriftzüge oder bewegte Bilder produzieren.

Man kann allgemein so vorgehen. daß die als Trägerfläche für die Information vorgesehene Fläche nach einem Raster aufgeteilt wird (wie dies im Prinzip auch von anderen optischen Informations-Trägern bekannt ist). Das Raster ergibt sich aus der Zahl und geometrischen Verteilung der einzelnen zur Energieabgabe bzw. -übertragung befähigten (in erster Näherung als punktförmig angenommenen) Elemente E. Eine weitere Kenngröße ist die von den Elementen E abzugebende maximale und die relative Leistung. Die Flächenausdehnung der zur Energieübertragung befähigten Elemente E wird innerhalb gewisser Grenzen von den Anforderungen an die Auflösung bei der wiederzugebenden Information abhängen. Als Richtwert kann angenommen werden, daß das Einzelelement E z.B. als Heizquelle eine energieabgebende Oberfläche von $\leq$ 10mm$^2$ besitzt, vorzugsweise zwischen $10^{-5}$ und $10^{-1}$ mm$^2$. Die vorliegenden Erfahrungen legen nahe, daß der gewöhnlich in Form von Tafeln bzw. Platten oder Schirmen vorliegende, die Polymermischung P enthaltende Informationsträger an wenigstens 10.000, in der Regel gleichmäßig verteilten Punkten unabhängig voneinander erwärmt werden kann. Die zur Darstellung der Information angewendeten Träger, wie Anzeigetafeln, Bildschirme oder -platten, können hinsichtlich ihrer horizontalen und vertikalen Rasteraufteilung z.B. den Fernsehschirmen des Standes der Technik angepaßt sein. Der Träger, d.h. die Platte, kann beispielsweise so aufgeteilt sein, daß jeder der getrennt heizbaren Punkte in ein rotes, gelbes oder blaues Element zerfällt.

Auch die umgekehrte Ausführung - wie vorstehend beschrieben - ist möglich: Dabei wird die Polymermischung P in einer der beschriebenen Anwendungsformen im Ausgangszustand auf einer Temperatur oberhalb der LCST gehalten (wobei sie sich als im wesentlichen nicht-lichtdurchlässig darstellt). Die Darstellung der Information kann dann durch gezieltes Abschalten der punktförmigen energieübertragenden Elemente E oder durch gezielte Energieabfuhr, beispielsweise durch punktförmiges Abkühlen auf Temperaturen unterhalb der LCST erfolgen, beispielsweise durch ausströmende, unter Druck stehende Gase wie Druckluft usw. Die Betriebstemperatur liegt in einem solchen Falle zweckmäßig mindestens oberhalb der LCST. Im letztgenannten Falle kann z.B. Solarenergie zur Aufrechterhaltung der Betriebstemperatur angewendet werden.

Erfindungsgemäß kann den Polymermischungen P thermische Energie in allen aus der Technik bekannten Ausführungsarten und -formen zugeführt werden. sofern diese dem angestrebten Ziel der gerichteten, steuerbaren Energieabgabe angepaßt sind.

In der Mehrzahl der Fälle wird die abzugebende thermische Energie durch Umwandlung von ursprünglich elektrischer Energie erzeugt werden. Man kann z.B. beim Stromdurchgang durch Materie entstehende

EP 0 177 063 B1

Wärme (Widerstandswärme oder die durch Strahlung übertragene und gegebenenfalls umgewandelte Energie (Infrarot, Licht, Mikrowelle) anwenden.

Besonders bietet sich die Anwendung von Lasern an, die bekanntlich sehr intensive, kohärente, monochromatische und leicht streng parallel zu bündelnde Strahlung abgeben. Insbesondere eignet sich die Anwendung von Lasern, wie sie auch in der Werkstoffbearbeitung und in der Medizin Anwendung finden, insbesondere Rubin-, Argon-Laser, YAG : Nd- und Glas :

Nd-Laser, (YAG = Yttrium-Aluminium-Garnet) (c.f. Ross "Laser Applications, New York Academic Press, Ready. "Industrial Applications of Lasers," London. Academic Press. 1978). günstig ist auch die Anwendung von Halbleiter-Dioden-Lasern.

Die Energieabgabe wird im Falle jeder Energiequelle, bzw. jedes Elements E zweckmäßig auf die beabsichtigte Wirkung ausgerichtet (in Abhängigkeit von der LCST).

Lesung der Information

Die Erkennung bzw. Registrierung (Lesen) der Information geschieht primär optisch.

So kann die Information beispielsweise durch auffallendes Licht gelesen werden.

In vielen Fällen kann die Information beispielsweise bei Tageslicht, d.h. ohne Einschalten einer (zusätzlichen) Lichtquelle gelesen werden.

Eine andere Möglichkeit besteht in der Lesung/Registrierung der Information mittels einer hinter dem die Polymermischung P enthaltenden System angebrachten Lichtquelle. Weiter kann die Information auch mittels einer oder mehrerer Lichtquellen abgelesen werden, die in der Ebene, in der die Information liegt, emittiert.

In der Regel wird man zum Lesen der Information Licht im Wellenlängenbereich 200 bis 800 nm verwenden.

Lese- bzw. Registriervorrichtungen des dafür anwendbaren Typs sind an sich bekannt (vgl. z.B. "Programmsteuerung" in Encyklopädie Naturwissenschaft und Technik, Verlag Moderne Industrie, Landsberg 1980).

Die Polymeren $P_1$ und $P_2$

Auszugehen ist zunächst von den von der Technik zur Verfügung gestellten Polymermischungen, die LCST zeigen. (Vgl. Aufgabe und Lösung) Vorzugsweise soll wenigstens eines der Polymeren $P_1$ und $P_2$ durch radikalische Polymerisation zugänglich sein. Als zusätzliches Auswahlkriterium gilt definitionsgemäß, daß die LCST der Polymermischungen P unterhalb 140° C, speziell unterhalb 100° C liegen soll.

Unter das erstgenannte Merkmal fallen die bekannten Polymersysteme P gebildet aus Polymethylacrylat/Polyvinylidenfluorid (LCST = 300° C), Polycarbonat/Polycaprolacton (LCST = 260° C), die dann als nicht geeignet erscheinen.

Weiter sind von besonderem Interesse die bekannten Polymermischungen P aus carbonylgruppenhaltigen Polymeren $P_1$ und Halogen-haltigen Polymeren $P_2$, insbesondere Polymermischungen P aus Estergruppen enthaltenden Polymeren $P_1$ und chlor-haltigen Polymeren $P_2$, so z.B. die Polymermischung aus Ethylen-Vinylacetat-Copolymeren (im folgenden $P_1$-II genannt) und chloriertem Polyethylen (im folgenden $P_2$-II genannt) sowie das Polymersystem P bestehend aus Butylacrylat/chloriertem Polyethylen, im folgenden $P_1$-III/$P_2$-II genannt, ferner das System PMMA/chloriertes Polyethylen, im folgenden $P_1$-IV/$P_2$-II genannt. Darüber hinaus sind die Systeme Poly-n-Hexylmethacrylat/PVC, Poly-n-Butylacrylat/PVC, Poly-n-Propylacrylat/PVC zu nennen.

Das System:Estergruppen-enthaltende Polymere als $P_1$ und Chlor enthaltende Polymere als $P_2$ kann dabei erheblich variiert werden. Voraussetzung ist, daß der Chloranteil im Polymeren $P_2$ genügend hoch ist (in der Regel im Bereich von 25 - 75 Gew.-%) und daß eine ausreichende Anzahl von Carbonylgruppen als Wechselwirkungspartner im Polymeren $P_1$ zur Verfügung steht. (Gewichtsanteil der Carbonylgruppen (C = 0) in der Regel im Bereich von 10 - 35 %).

Als Beispiel für die weite Variationsmöglichkeit des Systems Estergruppe im Polymeren $P_1$/Chlor haltiges Polymeres $P_2$ seien die folgenden, bisher nicht bekannten Systeme auf Basis Poly(meth)acrylat/Chlorkautschuk genannt:

Copolymerisate aus Isobutylmethacrylat und 2-Ethylhexylmethacrylat (im folgenden $P_1$-V genannt) und Chlorkautschuk (im folgenden $P_2$-III genannt) sowie Copolymere aus Methylmethacrylat und Ethylacrylat (im folgenden $P_1$-VI genannt) und Chlorkautschuk ($P_2$-III). Diese Mischsysteme $P_1$-V/$P_2$-III und $P_1$-VI/$P_2$-III werden in den Beispielen näher erläutert.

Die genaue Lage des Trübungspunktes (LCST) läßt sich erfahrungsgemäß im allgemeinen durch die Variation eines oder mehrerer der folgenden Parameter in gewissen Grenzen beeinflussen:

a) durch Veränderung der Anteile der wechselwirkenden Gruppen in den Polymeren $P_1$ und $P_2$. Dies kann durch Copolymerisation mit anderen Monomeren oder aber durch Variation der Monomerbausteine innerhalb einer homologen Reihe geschehen. So wird z.B. in der Reihe Polymethylmethacrylat, Polyethylmethacrylat, Polybutylmethacrylat der Anteil der Estergruppen im Polymeren geringer. Dabei gilt im allgemeinen, daß die LCST sinkt, wenn der Anteil der wechselwirkenden Gruppen geringer wird oder umgekehrt; Polymere mit einer höheren Konzentration an funktionellen Gruppen (z.B. Chloranteil im Polymeren $P_2$ und Estergruppen in $P_1$) zeigen die höhere LCST (vgl. D.J. Walsh et al., Macromolecules 16, 388-391 (1983).

b) Durch Veränderung der Anteile von $P_1$ bzw. $P_2$ (vgl. Abb. 1) und gegebenenfalls einem weiteren Polymeren $P_3$ an der Polymermischung P.

c) Durch Zusatz einer oder mehrerer niedermolekularer Substanzen W als Weichmacher und/oder Lösungsmittel. In der Regel wird durch den Zusatz von niedermolekularen Substanzen W - vor allem, wenn nur geringe Mengen, z.B. 10 Gew.-%, bezogen auf die Polymermischung P, eingesetzt werden - die LCST gesenkt. Vor allem wird durch den Zusatz von Weichmachern die Beweglichkeit des Systems P erhöht (vgl. R.E. Bernstein et al., Macromolecules 10. 681-686 (1977).

d) Durch Veränderung des Molekulargewichts der Polymeren $P_1$ und $P_2$.

Im allgemeinen wird die LCST mit zunehmendem Molekulargewicht niedriger (J.H. Halary et al., Polymer, 25, 956-962 (1984)). Das Molekulargewicht sollte jedoch nicht zu hcch gewählt werden, z.B. vorzugsweise $< 10^6$ oder besonders bevorzugt $< 500\,000$, da bei höheren Molekulargewichten kinetische Effekte eine übergeordnete Rolle spielen (vgl. D.J. Walsh, Zhikuan Chai, Makromol. Chem. 184, 1459-1468 (1983).

Unter Berücksichtigung der Parameter a) - d) läßt sich in der Regel ein gegebenes Polymersystem P einerseits zu einem irreversiblen Datenspeicher hin optimieren andererseits zu einem schnell schaltbaren Anzeigesystem ausbauen. Dies wird im folgenden an dem System:Estergruppen enthaltende Polymere als $P_1$/Chlor haltige Polymere als $P_2$ aufgezeigt.

Will man dieses System zu einem reversiblen Speicher umgestalten, so muß man die Beweglichkeit des Polymersystems im Bereich der LCST erhöhen. Man muß also den Abstand LCST - Glastemperatur (Tg) vergrößern. Dies gelingt in einfacher Weise durch Zusatz von Weichmachern. Die Information kann durch kurzzeitiges Erwärmen auf Temperaturen > LCST eingeschrieben und durch Abschrecken auf Raumtemperatur fixiert werden. Das Löschen der Information kann durch Tempern bei LCST - 10° C erfolgen.

Darüber hinaus besteht die Möglichkeit, die Einsatzbreite des Systems durch den Zusatz von niedermolekularen Substanzen zu erweitern.

Durch den hohen Anteil an niedermolekularer Substanz zeigt das System eine große Beweglichkeit. Die Änderung der Transmission beim Übergang von T < LCST (klar) zu T > LCST (trüb) erfolgt schnell (Abnahme der Transmission um mehr als 20 % innerhalb von weniger als einer Sekunde), ebenso die Umkehrung dieses Vorgangs, d.h. der Übergang von T > LCST (trüb) zu T < LCST (klar).

Hier liegt der Typ eines schnell reversiblen Systems vor, das sich für die Darstellung optisch ablesbarer Information auf z.B. großflächigen Anzeigetafeln eignet.

Für den erfindungsgemäßen Einsatz besonders geeignet sind Polymermischungen aus Estergruppen enthaltenden Polymeren als $P_1$ und Chlor haltigen Polymeren als $P_2$. Wie berichtet, ist eine Anzahl von Polymermischungen P mit LCST basierend auf der Kombination von Estergruppen enthaltenden Polymeren und chlor-haltigen Polymeren bekannt. Das Auffinden neuer Polymermischungen und das Maßschneidern derartiger Polymermischungen für den erfindungsgemäßen Einsatz ist im Falle dieser Polymermischungen besonders einfach. Bei diesem System $P_1$-V/$P_2$-III (Copolymeres aus Isobutylmethacrylat und 2-Ethylhexylmethacrylat/Chlorkautschuk) läßt sich die Einsatzbreite im wesentlichen durch die Beweglichkeit der Polymermischungen P und damit durch die Glastemperatur der Polymermischung einstellen.

So ist das Polymersystem $P_1$-V/$P_2$-III ohne Zusatz von Weichmachern oberhalb der LCST ein irreversibles Mehrphasensystem. In der Praxis führt kurzzeitiges, lokalisiertes Erwärmen (z.B. 30 Sekunden auf eine Temperatur oberhalb der LCST)zu einer bleibenden Weißverfärbung am Ort der Erwärmung. Hier liegt der Typ eines Systems zur Speicherung von Daten vor. Dabei wird die durch Erwärmung der Polymermischung P über die LCST erzeugte Trübung mittels einer lichtempfindlichen Vorrichtung, beispielsweise einer Fotozelle, gelesen. Mit einem solchen System sind aber noch andere Anwendungen möglich, z.B. kann eine eingefärbte, transparente Platte mit einem weißen Schriftzug versehen werden.

Gerade bei der Anwendung als Werbeträger, aber auch bei der Anwendung als Datenspeicher kann die Polymermischung P als Träger und gleichzeitig als Informationsmaterial dienen. Man wird jedoch vorteilhafterweise auch von den anderen Konfigurationen (s. oben) Gebrauch machen.

Setzt man dem Polymersystem $P_1$-V$_1$$P_2$-III größere Mengen niedermolekularer Substanzen zu, so erhält man dagegen ein schnell reversibles Polymersystem P, das sehr gut für eine optische Anzeige einsetzbar ist. Speziell bei einer solchen Anwendung als optische Anzeige ist es, wie erwähnt, vorteilhaft, das ganze System auf eine Arbeitstemperatur knapp (ca. 20 bis 5 °C) unterhalb des Trübungspunktes zu erwärmen und kurzfristige Energie zuzuführen, um eine möglichst geringe Trägheit des Systems zu gewährleisten.

Weitere Polymermischungen, die, wie die vorgenannten den Auswahlkriterien von P genügen, können in systematischer Weise aufgefunden werden, wobei jeweils die eine Komponente, beispielsweise $P_1$, festgehalten wird und $P_2$ variiert wird.

Man kann dabei so vorgehen, daß der Polymerkomponente $P_1$ in einem geeigneten Lösungsmittel, wie z.B. Toluol gelöst, Lösungen der Polymerkomponente $P_2$ in verschiedenen Mengenverhältnissen relativ zueinander zugemischt werden. Es wird dann ein Film ausgezogen und dieser Film einmal bei Raumtemperatur und dann bei erhöhter Temperatur (beispielsweise 100 °C, 140 °C) visuell beurteilt. Polymerunverträglichkeit zeigt sich häufig bereits beim Mischen der Polymerlösungen im Reagenzglas durch Trübung an. Dabei ist die Auswahl des Lösungsmittels wichtig, so sollte eine große Asymmetrie in der Polymer-Lösungsmittel-Wechselwirkung vermieden werden.

Eine andere Möglichkeit ist im Mischen der Polymeren in der Schmelze zu sehen. Dabei ist jedoch in der Regel unterhalb LCST zu arbeiten, da ein Mischen oberhalb der LCST stets zwei Phasen ergeben wird. Eine einfache Mischung der Polymeren kann auch dadurch erzielt werden, daß man eine homogene Lösung der Polymeren $P_1$ und $P_2$ in einem Lösungsmittel herstellt und diese, die Polymeren $P_1$ und $P_2$ enthaltende Lösung, in einem Nicht-Lösungsmittel ausfällt.

Eine weitere Möglichkeit ist in der Polymerisation der Monomeren eines Polymeren, z.B. $P_1$, in Gegenwart des Polymeren $P_2$ zu sehen. Man kann also die das Polymere $P_1$ aufbauenden Monomeren als Lösungsmittel für $P_2$ verwenden. Aber auch hier kann bei bestimmten Zusammensetzungen Phasentrennung im Verlauf der Polymerisation auftreten, so daß u.U. die Polymerisation zum Polymeren $P_1$ in mehreren Etappen durchgeführt werden muß.[Vgl. auch J.S. Higgins and D.J. Walsh. Polymer Engineering and Science, 24, 555 (1984).] *

Schaltung

Die Energiezufuhr wird in der Praxis hauptsächlich durch
a) Licht
b) Wärmestrahlung
c) elektrisch erzeugte Wärme erfolgen.

In allen Fällen kann von den Schaltungsmöglichkeiten und von den Modellen des Standes der Technik Gebrauch gemacht werden. Zur Erwärmung durch Licht nach a) bieten sich insbesondere Laser oder Lichtleitkabel an.

Bei einer großen Anzeigetafel wird zur Steuerung der räumlich und zeitlich variablen Abläufe eine relativ komplizierte Steuerung notwendig. Ähnliches gilt für die Informationsdarstellung auf einem Fernsehschirm.

Bei einer Anwendung als einfache Leuchtreklame genügt es beispielsweise zur Herstellung eines bewegten Bildes, Heizdrähte zeitlich versetzt anzusteuern, die nach einem gleichmäßigen Raster oder einem sonstigen Muster auf die Fläche Energie übertragend angebracht sein können.

Eine weitere interessante Anwendung der Polymermischungen P im Rahmen der Informationstechnik liegt im Bereich der Lichtleiter. Als Lichtleiter seien im Einklang mit dem Stand der Technik Stäbe oder dünne Fasern aus hochtransparenten optischen Materialien verstanden, die Licht durch vielfache Totalreflexion übertragen, wobei das durch die (polierte) Eingangsfläche eingetretene Licht allen Biegungen der Faser folgt und an deren Ende aus der polierten Endfläche austritt. (Vgl. N.S. Kapany:"Fiber Optics" Academic Press, New York 1967).

Es können sowohl Lichtleiter mit großem Kern (Reflexion an der Umhüllung) als Lichtleiter mit kleinem Kern (mono-mode-fiber die nur einen Lichtstrahl enthält), als Lichtleiter aus einem Materialkern und mit Luftspalt zur absorbierenden Hülle unter Verwendung der Polymermischungen P zur Anwendung kommen. Auch hier wirkt das Polymersystem in Abhängigkeit von der Temperatur als Lichtleiter (unterhalb der Phasengrenze im einphasigen Bereich) oder als Streuelement (oberhalb der LCST. d.h. im zweiphasigen Bereich).

Die beim Übergang vom klaren Einphasengebiet in das Zweiphasengebiet auftretende Lichtstreuung hängt naturgemäß u.a. von der Größe der gebildeten Domänen der entmischten Polymeren $P_1$ und $P_2$ ab.

* Die Herstellung der Polymeren $P_1$ und $P_2$ schließt somit unmittelbar an den Stand der Technik an. (Vgl. Houben-Weyl, loc.cit. und sonstige Zitate).

Diese Domänenstruktur läßt sich z.B. durch Zufügen von Pfropfpolymerisaten der beiden Polymerarten aufeinander steuern.

Darüber hinaus können solche Domänen regelrecht vorgegeben werden, indem man z.B. eines der beiden Polymeren in Form eines schwach vernetzten Teilchens, beispielsweise eines Latex-Teilchens einsetzt und auf diesem Wege die Charakteristik der Trübung steuert.

Zu den Konfigurationen der Polymermischungen P

Die gegebenenfalls die niedermolekulare Substanz W in Form eines Weichmachers und/oder eines Lösungsmittels enthaltende Polymermischung P kann als solche auf einen Träger aufgebracht werden.

Die Polymermischung P, gegebenenfalls in Form eines die niedermolekulare Substanz W enthaltenden Gemisches kann zum Verkleben von Trägergrundlage und Deckschicht (die in der Regel materiell identisch sind) verwendet werden. Die Einbettung zwischen Träger- und Deckschicht kann auch nach Art eines Monomer/Polymer (Mopo-)Systems erfolgen.

Die Polymermischung P kann auch durch Co-Fällung dargestellt werden und als solche auf die Trägergrundlage aufgebracht. insbesondere aufgepreßt werden.

Zur Be- bzw. Verarbeitung der Polymermischung P sind die verschiedenen Verfahren der Kunststoffindustrie geeignet, wobei die jeweils physikalisch-chemischen Daten der Polymermischung P wie ihre Tg, LCST, Wärmebeständigkeit usw. berücksichtigt werden.

So kann die Polymermischung. P beispielsweise durch Spritzgießen erzeugt oder bearbeitet werden. In anderen Fällen kann die Polymermischung P durch Extrusion erzeugt oder bearbeitet, beispielsweise auf eine Trägergrundlage aufgebracht werden. In beiden Fällen ist es vorteilhaft, wenn die Polymermischung P bei einer Temperatur unterhalb LCST erzeugt wird.

Wie bereits erwähnt, können Polymermischungen, welche die von den erfindungsgemäßen Systemen P zu fordernden Bedingungen erfüllen, in gezieltem, systematischem Vorgehen aufgefunden werden.

Beispiel 1

Durch Copolymerisation des als Homopolymeren mit Chlorkautschuk unverträglichen 2-Ethylhexylmethacrylats mit dem besser verträglichen Isobutylmethacrylat lassen sich. Polymermischungen mit einer unteren kritischen Lösungstemperatur (LCST) von beispielsweise ca. 100° C herstellen.

Die Polymermischung Chlorkautschuk/Copolymerisat 2-Ethylhexylmethacrylat-Isobutylmethacrylat entspricht den Anforderungen des Polymersystems P. Die exakte Lage der LCST läßt sich innerhalb gewisser Grenzen durch das Mischungsverhältnis und/oder Lösungsmittelzusatz und/oder Weichmacherzusatz variieren.

Die Polymeren werden durch Lösungspolymerisation in Toluol, Initiator : Dilauroylperoxid, Polymerisationstemperatur 70° C hergestellt.

Beispiel 2:

Anzeigetafel auf der Basis einer schnell schaltbaren Polymermischung $P_1$-V/$P_2$-III mit LCST.

50 g Chlorkautschuk (Pergut S 10® der Bayer AG)werden in 200 g Toluol gelöst. Nach Zusatz von 100 g Isobutylmethacrylat. 100 g 2-Ethylhexylmethacrylat und 2 g Dilauroylperoxid wird bei 70° C polymerisiert. Anschließend wird noch 1 h bei 80° C nacherhitzt. Es resultiert eine bei 70° C weiße Lösung. Abkühlung auf Raumtemperatur führt zu einer hochviskosen. klaren, gelblichen Lösung. Mit wenigen Tropfen dieser Polymerlösung werden 2 Glasplatten (Dicke jeweils ca. 0.5 mm) miteinander verklebt. Es resultiert ein glasklares System. das beim Erwärmen über die LCST (ca. 60° C) plötzlich trüb wird. Dieser Übergang ist völlig reversibel.

Die folgende Tabelle zeigt die Lichtdurchlässigkeit dieses Systems bei Raumtemperatur und bei 70° C.

15

## Lichtdurchlässigkeit im System Glas/Polymermischung P/Glas

| Lichtwellenlänge (nm) | Lichtdurchlässigkeit % | |
| --- | --- | --- |
| | Raumtemperatur | 70°C |
| 380 | 90 | 20 |
| 530 | 91 | 40 |
| 750 | 92 | 50 |

Dieser Vorgang: Erwärmung in den lichtstreuenden Zweiphasenbereich und Abkühlen in den klaren, einphasigen Bereich, wurde mindestens 40 mal wiederholt, ohne daß eine Änderung am System zu beobachten war.

Wie das Polymersystem Chlorkautschuk/Copolymer 2-Ethylhexylmethacrylat-Butylmethacrylat zeigt auch das System Chlorkautschuk/Copolymer Methylmethacrylat-Ethylacrylat (3 : 2) eine LCST.

Beispiel 3:

Informationsspeicher auf der Basis einer thermisch nicht reversiblen Polymermischung $P_1$-VI/$P_2$-III mit LCST.

50 g Chlorkautschuk (Pergut S 10® von Bayer) wurden in 200 g Toluol gelöst. Es wurden 120 g Methylmethacrylat, 80 g Ethylacrylat und 2 g Dilauroylperoxid zugesetzt. Anschließend wurde bei 70°C polymerisiert. Es wurden weitere 200 g Toluol zugesetzt. Nach Reaktionsende wurde noch 2 h bei 70°C gehalten. Nach dem Abkühlen wurde eine viskose, klare, hellgelbe Lösung erhalten (= Lösung 3A). Lösung 3A wurde zu einem Polymerfilm aufgetrocknet.

Kurzes Erwärmen des Filmes auf Temperaturen über ca. 120°C führte am Ort der Erwärmung zu einer Trübung, die auch beim Abkühlen bestehen bleibt. Bringt man den Film in ein Photometer, so wird an den erwärmten Stellen eine Lichtdurchlässigkeit von < 40 % gefunden, an den nicht erwärmten dagegen eine Lichtdurchlässigkeit von > 90 %.

Beispiel 4:

Reversibler Informationsspeicher.

Lösung 3A aus Versuch 3 wird mit 40 % Benzyl-butyl-phthalat (bezogen auf den Polymeranteil) versetzt und auf eine Glasplatte aufgezogen und getrocknet. Es resultiert ein glasklarer Polymerfilm mit einem Trübungspunkt von 90°C. Der Phasenübergang ist in diesem Fall reversibel.

Beispiel 5:

Informationsspeicher mit reversibler oder irreversibler Informationsspeicherung auf Basis $P_1$-VI/$P_2$-III.

Setzt man dem System Chlorkautschuk/Copolymer Methylmethacrylat-Ethylacrylat nur geringe Mengen Weichmacher zu, so kann die durch Wärmezufuhr aufgeprägte Information durch Abschrecken fixiert werden. Durch Temperung weniger Grad Celsius unterhalb der LCST kann diese Information jedoch wieder gelöscht werden.

Beispiel 6

Gezielte Entwicklung einer Polymermischung P.
Einsatz von Polymeren $P_1$ und $P_2$ mit hoher Glastemperatur zur Synthese eines irreversiblen Informationsspeichers.

Das Polymethylmethacrylat zeigt einen Brechungsindex von $n_D^{20}$ = 1,492; die Glastemperatur beträgt: Tg = 105°C. Polystyrol zeigt einen Brechungsindex von $n_D^{20}$ = 1,59; die Glastemperatur beträgt: Tg = 100°C.

Polymethylmethacrylat und Polystyrol sind in nicht modifizierter Form nicht miteinander verträglich. Durch

EP 0 177 063 B1

Einführung von Gruppen komplementärer Unähnlichkeit in die beiden Polymeren läßt sich jedoch eine Verträglichkeit erzeugen. So kann man beispielsweise das PMMA mit einer polymerisierbaren Säure (hier Itakonsäure) modifizieren und das Polystyrol entsprechend mit einem einpolymerisierbaren Amin (hier N,N-Dimethylaminoneopentylmethacrylat).

Durchführung

In einem Polymerisationsgefäß werden
71,25 g Methylmethacrylat
3,75 g Itakonsäure
0,225 g Dodecylmercaptan
0,75 g t-Butylperpivalat und
150,0 g Methylethylketon
vorgelegt und 6 Stunden bei $75\,^{\circ}$ C unter Argon gerührt. Es resultiert eine klare, leicht gelb gefärbte Polymerlösung. Anschließend setzt man:
71,25 g Styrol
3,75 g 3-Dimethylamino-2,2-dimethyl-propyl-1-methacrylat
0,225 g t-Dodecylmercaptan und
0,75 g Azo-iso-buttersäure-nitril (AIBN) zu und polymerisiert 20 Stunden bei $80\,^{\circ}$ C.
Es resultiert eine klare, leicht gelb gefärbte Polymerlösung, Feststoffgehalt: 48 %, die nebeneinander das Polymere $P_1$-X (Copolymere aus 95 % MMA und 5 % Itakonsäure) und $P_2$-X (Copolymere aus 95 % Styrol und 5 % 3-Dimethylamino-2,2-dimethyl-propyl-1-methacrylat) enthält.
Beim Eintrocknen der so hergestellten Polymerlösung resultiert ein klarer Polymerfilm, der beim Erwärmen über ca. $100\,^{\circ}$ C weiß wird. Durch Einführung von Säuregruppen in die Polymerspecies 1 und von Aminogruppen in die Polymerspecies 2 konnte also eine bei Raumtemperatur verträgliche Polymermischung erzeugt werden. Die Lage der Entmischungstemperatur (LCST) läßt sich durch die Menge der eingesetzten Säure- und Aminogruppen einstellen.

Beispiel 7

Herstellung einer Datenspeicherplatte unter Verwendung der Polymermischung P mit LCST gemäß Beispiel ($P_1$-X / $P_2$-X)
Substrat: Plexiglas GS 233® (hochmolekulares PMMA) Platten: 200 x 200 x 1 mm
Einstellung des Lackes:
26 g Polymerlösung gemäß Beispiel 6 wird mit
14 g Cyclohexanon und
10 g Isopropanol
verdünnt. Es resultiert ein Lack mit einem Feststoffgehalt von 25,0 Gew.-%, Viskosität: 43 cSt.
Die Platten werden damit einseitig beschichtet.
Trocknung: zunächst Ablüften bei Raumtemperatur, anschließend bei $65\,^{\circ}$ C im Trockenschrank.
Es resultieren Plexiglasplatten mit einer klaren einseitigen Beschichtung: Schichtdicke: 9 $\mu$m.
Alle Arbeiten (Reinigung des Substrats, Filtration und Auftrag des Lacks werden unter Reinraumbedingungen durchgeführt (Klasse 10).
Durch lokale Erwärmung der beschichteten Plattenseite (erwärmte Fläche: 0,1 mm x 1 mm) auf $95\,^{\circ}$ C wird in diese Platte eine Information eingeschrieben, die sowohl durch Streulichtmessung als auch durch Messung der Transmission wieder gelesen werden kann.

Beispiel 9

Die Datenspeicherplatte gemäß Beispiel 7 wird auf der Seite der Polymerblends mit einer ca. 20 $\mu$m dicken Polymethylmethacrylatfolie abgedeckt.
Schichtaufbau: 1 mm Plexiglas GS 233® (Polymethylmethacrylat) 0,009 mm Polymerblend $P_1$-X / $P_2$-X 0,020 mm Polymethylmethacrylat

Beispiel 9

Gezielte Entwicklung einer Polymermischung P.
Einsatz von Polymeren $P_1$ und $P_2$ mit niedriger Glastemperatur zur Synthese eines schnell reversibel

17

entweichenden Systems.

Poly-2-Ethylhexylacrylat zeigt einen Brechungsindex von ca. 1,48 ($n_D^{20}$), die Glastemperatur beträgt: -55 °C.

Copolymere aus 70 % Tetradecylmethacrylat (Methacrylsäureester eines Alkoholgemisches aus $C_{12}$ bis $C_{18}$-Alkohol. Mittlere Kohlenstoffzahl des Alkohols: 14).

und 30 % Styrol, Brechungsindex: 1,51, Glastemperatur < Raumtemperatur.

Poly-2-Ethylhexylacrylat und das Copolymere aus 70 % Tetradecylmethacrylat und 30 % Styrol sind nicht miteinander verträglich.

Eine Mischbarkeit läßt sich aber auch hier erreichen, wenn das eine Polymere mit einer polymerisierbaren Säure copolymerisiert, das andere Polymere mit einer polymerisierbaren Base copolymerisiert wird (vgl. Beispiel 6).

Dabei wird mit zunehmendem Anteil an Säure bzw. Base in den Polymeren die Verträglichkeit besser, d.h. die LCST steigt. Wie im folgenden gezeigt wird, kann demzufolge die LCST über den Anteil von Säure bzw. Amin in den Polymeren beliebig eingestellt werden.

Durchführung:

Synthese des Polymeren $P_2$-XI

Eine Mischung aus

75 g 3-Dimethylamino-2,2-dimethyl-propyl-1-methacrylat (15 Gew.-%)

297,5 g Tetradecylmethacrylat * (59,5 Gew.-%)

127,5 g Styrol (25,5 Gew.-%)

wird unter Zusatz von 1,5 g t-Dodecylmercaptan als Regler und 1 g AIBN als Initiator direkt in Substanz polymerisiert.

Reaktionsbedingungen:     24 Stunden bei 55 °C und anschließend 24 Stunden bei 60 °C

Man erhält eine weiche, klare, schwach gelb gefärbte Polymerisatmasse, $\eta_{spec}/C$ = 63 ml/g.

Synthese des Polymeren $P_2$-XII

Man wiederholt die Polymerisation wie für das Polymere $P_2$-XI beschrieben, wählt jedoch eine andere Polymerisatzusammensetzung:

10 Gew.-% 3-Dimethylamin-2,2-dimethyl-propyl-1-methacrylat

63 Gew.-% Tetradecylmethacrylat *

27 Gew.-% Styrol

Man erhält ebenfalls eine weiche, klare, schwach gelb gefärbte Polymerisatmasse.

$\eta_{spec}/C$ = 56 ml/g.

Synthese des Polymeren $P_2$-XIII

Man wiederholt die Polymerisation wie für das Polymere $P_2$-XI beschrieben, wählt jedoch eine andere Polymerisatzusammensetzung.

6 Gew.-% 3-Dimethylamino-2,2-dimethyl-propyl-1-methacrylat

65,8 Gew.-% Tetradecylmethacrylat *

28,2 Gew.-% Styrol

Man erhält ebenfalls eine weiche, klare, schwach gelb gefärbte Polymerisatmasse.

$\eta_{spec}/C$ = 48 ml/g.

Synthese des Polymeren $P_1$-XI

In eine Vorlage aus 500 g Toluol und 1,25 g t-Butyl-per-2-Ethylhexanoat läßt man unter Argon bei einer Temperatur von 80 °C innerhalb von 4 Stunden eine Mischung aus

1,25 g t Butyl-per-2-Ethylhexanoat

0,75 g Dodecylmercaptan

25 g Acrylsäure und

* Methacrylsäureester     eines   Alkoholgemisches     aus   $C_{12}$-$C_{18}$-Alkoholen;     mittlere   Kohlenstoffzahl   des   Alkohols:   14.

475 g 2-Ethylhexylacrylat

tropfen, anschließend wird noch 4 Stunden bei 80° C gerührt. Es resultiert eine ca. 50%ige Polymerlösung, $\eta_{spec}/c$ = 18 ml/g.

Synthese von Polymermischung mit LCST durch Abmischen von $P_1$-XI mit $P_2$-XI

Aus der ca. 50 %igen Polymerlösung $P_1$-XI in Toluol und dem Polymerisat $P_2$-XI wird eine ca. 20 %ige Polymerlösung in Toluol hergestellt. Diese Polymerlösung wird auf eine 0,2 mm dicke Glasplatte aufgezogen und getrocknet. Es resultiert ein klarer Polymerisatfilm, der beim Erwärmen über die LCST trüb wird. Die Lage der LCST hängt von dem Verhältnis $P_1$-XI zu $P_2$-XI ab. Beim Abkühlen unter die LCST wird die Polymerisatmischung innerhalb weniger Sekunden wieder klar, d.h. der Entwicklungsvorgang ist reversibel.

Tabelle 1    Lage der LCST als Funktion des Mischungsverhältnisses $P_1$-XI / $P_2$-XI


Anteil der Polymeren an der Mischung P: in Gew.-%         (LCST (°C)

| Gew.-% $P_1$-XI | Gew.-% $P_2$-XI | |
|---|---|---|
| 10 | 90 | 170 |
| 30 | 70 | 130 |
| 50 | 50 | 120 |
| 70 | 30 | 110 |
| 90 | 10 | 120 |

In Analogie zur Synthese der Polymermischung P auf Basis $P_1$-XI / $P_2$-XI werden durch Abmischung von 50 Gew.-% $P_1$-XI und 50 Gew.-% $P_2$-XII bzw. 50 Gew.-% $P_2$-XIII weitere Polymermischungen erzeugt.

| Polymermischung $P_1$-XI / $P_2$-XII | LCST: 75° C |
|---|---|
| Polymermischung $P_1$-XI / $P_2$-XIII | LCST: 54° C |

Beispiel 10

Anzeigetafel auf Basis der Polymermischung $P_1$-XI / $P_2$-XII

Die Polymermischung P bestehend aus 50 Gew.-% $P_1$-XI und 50 Gew.-% $P_2$-XII wird in eine Matrix aus Polymethylmethacrylat eingelagert.

Grundplatte:        Polymethylmethacrylatplatte, Dicke 3 mm
Zwischenschicht:    Polymethylmethacrylat-Lochplatte von 0,8 mm
                    Dicke ( = Gitterplatte mit einem Gitterabstand
                    von 4 mm, Stegdicke: 1 mm)
Deckschicht:        Polymethylmethacrylatplatte, Dicke 1 mm. Jedes der Gitterelemente (3 mm x 3
                    mm x 0,8 mm) enthält die Polymerisatmischung bestehend aus 50 Gew.-% $P_1$-XI
                    und 50 Gew.-% $P_2$-XII.

Durch Erwärmen der einzelnen Plattensegmente auf 95° C (z.B. durch IR-Strahlen) kann eine lokale Trübung erzeugt werden, die mit dem bloßen Auge erkennbar ist. Nach Abschalten der Wärmezufuhr verschwindet die Trübung innerhalb von ca. 1 Minute.

Beispiel 11

Man verwendet dieselbe Methode zur Einbettung der Polymermischung wie in Beispiel 10, wählt jedoch eine andere Polymerisatzusammensetzung (größerer Unterschied im Brechungsindex von $P_2$ und $P_2$). Herstellung als organische Dispersion, Brechungsindex:

$P_1$-XII $= n_D^{20} = 1{,}47$, $P_2$-XIV: $n_D^{20} = 1{,}56$.
Herstellung der Polymermischung $P_1$-XII / $P_2$-XIV

In einem Polymerisationsgefäß werden
60 g 1-Propanol
1,8 g Acrylsäure
0,03 g Dodecylmercaptan
58,2 g Acrylsäurebutylester
0,12 g t-Butylperoxyneodecanoat
in 3 Stunden einpolymerisiert (Badtemperatur: 50°C) Man erhält eine klare Polymerlösung ($\eta_{spec}/C = 53$ ml/g) (= $P_1$-XII)
Anschließend setzt man
60 g 1-Propanol
1,3 g 3-Dimethylamino-2,2-dimethyl-propyl-1-methacrylat
31,2 g 3-Phenylpropyl-1-acrylat und
0,03 g t-Butylperoxyneodecanoat zu. (= $P_2$-XIV) und polymerisiert 3 Stunden bei 50°C unter Argon.
Man erhält eine viskose, weiße Polymerdispersion, die nach dem Trocknen bei Raumtemperatur einen klaren Film ergibt. Ein auf eine Glasplatte aufgezogener Film, der im Bereich von RT bis ca. 65°C völlig klar ist, wird beim Erwärmen über die LCST (80°C) deutlich trüb.

## Patentansprüche

1. Verfahren zur Aufzeichnung, Speicherung und Darstellung optisch ablesbarer Information auf einem Träger, unter Verwendung von Kunststoffmaterial, das unter der Einwirkung thermischer Energie oder einer unmittelbar in thermische Energie umwandelbaren Energieform in optisch differenzierbarer Weise modifiziert werden kann, wobei als Kunststoffmaterial eine Polymermischung P aus wenigstens zwei verschiedenen, miteinander verträglichen, im Temperaturbereich von 0 - 100 Grad C nicht in Wasser löslichen Polymeren P1 und P2 verwendet wird und die Modifikation in optisch differenzierbarer Weise durch den Phasenübergang von einer verträglichen Polymermischung unterhalb LCST zu entmischten Polymeren P1 und P2 oberhalb der LCST oder die Umkehrung dieses Übergangs bewirkt wird, mit der Maßgabe, daß der Übergang aus einem durch Polymerverträglichkeit gekennzeichneten Einphasengebiet in das durch Entmischung gekennzeichnete Zweiphasengebiet durch Temperaturerhöhung und Übergang in umgekehrter Richtung durch Temperaturerniedrigung herbeigeführt wird,

dadurch gekennzeichnet,

daß die Polymermischung P eine untere kritische Lösungstemperatur LCST unterhalb 140 Grad C besitzt.

2. Verfahren gemäß Anspruch 1, dadurch gekennzeichnet, daß sich die Polymeren in ihrem Brechungsindex um wenigstens 0,03 unterscheiden.

3. Verfahren gemäß den Ansprüchen 1 bis 2, dadurch gekennzeichnet, daß die Polymermischung P eine LCST unterhalb 100 Grad C besitzt.

4. Verfahren gemäß den Ansprüchen 1 bis 3, dadurch gekennzeichnet, daß bei einer Temperaturerhöhung, die von 10 Grad C unter der LCST zu 10 Grad C oberhalb der LCST führt, eine Reduktion der Transmission um wenigstens 20 % erfolgt, wobei die Bestimmung an einer 0,1 mm dicken, nicht pigmentierten Probe vorgenommen wird.

5. Verfahren gemäß Anspruch 4, dadurch gekennzeichnet, daß die Transmission der Probe im Temperaturbereich von 10 Grad C unterhalb LCST bis mindestens 50 Grad C unterhalb der LCST > 80 % beträgt.

6. Verfahren gemäß Anspruch 1, dadurch gekennzeichnet, daß die Eingabe der Information mittels Temperaturänderung mit einer Geschwindigkeit von > 10 Grad C/sec erfolgt.

7. Verfahren gemäß Anspruch 1, dadurch gekennzeichnet, daß mindestens eine Polymerphase eine Domänengröße im Bereich von $10^2$ nm$^2$ bis $10^6$ nm$^2$ aufweist.

8. Verfahren gemäß den Ansprüchen 1 bis 7, dadurch gekennzeichnet, daß wenigstens 0,1 Gew.-% des Polymerisats P1 mit dem Polymerisat P2 kovalent verbunden ist.

9. Verfahren gemäß Anspruch 8, dadurch gekennzeichnet, daß das Polymerisat P1 mit dem Polymerisat P2 infolge Blockstruktur oder durch Pfropfung kovalent verbunden ist.

10. Verfahren gemäß den Ansprüchen 1- 9, dadurch gekennzeichnet, daß das Mischungsverhältnis des Polymeren P1 zum Polymeren P2 im Bereich 90 : 10 Gew.-Teilen bis zu 10 : 90 Gew.-Teilen liegt.

11. Verfahren gemäß den Ansprüchen 1 - 10, dadurch gekennzeichnet, daß die Polymermischung eingefärbt ist.

12. Verfahren gemäß den Ansprüchen 1 bis 11, dadurch gekennzeichnet, daß die Polymermischung P unmittelbar ohne Trägergrundlage verwendet wird.

13. Verfahren gemäß den Ansprüchen 1 bis 12, dadurch gekennzeichnet, daß sich die Polymermischung P auf einer Trägergrundlage befindet.

14. Verfahren gemäß Anspruch 13, dadurch gekennzeichnet, daß die Polymermischung P unter Verwendung einer Trägergrundlage und einer Abdeckung eingebettet ist.

15. Verfahren gemäß den Ansprüchen 1 bis 14, dadurch gekennzeichnet, daß die Polymermischung P in einer Schichtdicke von < 1 mm zur Anwendung kommt.

16. Verfahren gemäß den Ansprüchen 1 bis 15, dadurch gekennzeichnet, daß die Polymermischung P in einen als Matrix M dienenden Werkstoff eingelagert ist.

17. Verfahren gemäß Anspruch 16, dadurch gekennzeichnet, daß der Brechungsindex des die Matrix M bildenden Werkstoffs mit dem Brechungsindex der Polymermischung P unterhalb der LCST übereinstimmt.

18. Verfahren gemäß Anspruch 17, dadurch gekennzeichnet, daß die Polymermischung P in einem als Matrix dienenden Werkstoff M in Form diskreter Teilchen von einem Durchmesser im Bereich von 20 nm bis 200 $\mu$m eingelagert ist.

19. Verfahren gemäß den Ansprüchen 1 bis 18, dadurch gekennzeichnet, daß wenigstens eine Polymerkomponente der Polymermischung P durch Emulsionspolymerisation hergestellt worden ist.

20. Verfahren gemäß den Ansprüchen 1 bis 19, dadurch gekennzeichnet, daß beide Polymerkomponenten P1 und P2 der Polymermischung P durch Emulsionspolymerisation hergestellt worden sind.

21. Verfahren gemäß Anspruch 20, dadurch gekennzeichnet, daß die Emulsionspolymerisation nach dem Kern-Schale-Prinzip erfolgt, wobei ein weitgehend aus der Polymerkomponente P1 (P2) aufgebauter Latex für die Emulisonspolymerisation der Polymerkomponente P2 (P1) als Saatlatex dient.

22. Verfahren gemäß Anspruch 21, dadurch gekennzeichnet, daß die Emulsionspolymerisation in einem wenigstens drei Stufen umfassenden Prozeß durchgeführt wird, umfassend nacheinander die Polymerisation zur Polymerkomponente P1 (P2), zur Polymerkomponente P2 (P1) und zur Polymerkomponente PM, wobei unter PM ein mit der Matrix M verträgliches Polymermaterial zu verstehen ist, das besonders bevorzugt chemisch mit der Matrix M übereinstimmt.

23. Verfahren gemäß den Ansprüchen 14 - 22, dadurch gekennzeichnet, daß die Glastemperatur der verträglichen Polymermischung P unterhalb 0 Grad C liegt.

24. Verfahren gemäß den Ansprüchen 14 - 23, dadurch gekennzeichnet, daß die Glastemperatur der verträglichen Polymermischung P unterhalb -50 Grad C liegt.

25. Verfahren gemäß Anspruch 24, dadurch gekennzeichnet, daß die Glastemperatur Tg der Polymermischung P um wenigstens 100 Grad C unterhalb der LCST liegt.

26. Verfahren gemäß den Ansprüchen 1 bis 25, dadurch gekennzeichnet, daß die Polymermischung P oder das ganze die Polymermischung P enthaltende System auf eine Arbeitstemperatur von höchstens 20 Grad C unterhalb LCST gehalten wird, bevor die Information aufgebracht wird.

27. Verfahren gemäß den Ansprüchen 1 bis 26, dadurch gekennzeichnet, daß die als Trübung der Polymermischung P wahrgenommene Information digital eingegeben wird.

## Claims

1. Process for recording, storing and displaying optically readable information on a carrier, using plastics material which is capable of being modified in an optically differentiable manner under the effect of thermal energy or an energy form which can be converted directly into thermal energy, the plastics material used being a polymer mixture P of at least two different, but compatible, polymers P1 and P2 which are insoluble in water at temperatures in the range from 0 to 100°C, and the modification in optically differentiable manner being effected by the phase transition from a compatible polymer mixture below the LCST to separated polymers P1 and P2 above the LCST or by the reversal of this process, with the proviso that the transition from a single-phase range characterised by polymer compatibility into the two-phase range characterised by separation is brought about by an increase in temperature and transition in the opposite direction is brought about by a lowering of temperature, characterised in that the polymer mixture P has a lower critical solution temperature LCST of below 140°C.

2. Process according to claim 1, characterised in that the polymers differ by at least 0.03 in their refractive index.

3. Process according to claims 1 to 2, characterised in that the polymer mixture P has an LCST of below 100°C.

4. Process according to claims 1 to 3, characterised in that, with a temperature increase from 10°C below the LCST to 10°C above the LCST, there is a reduction in transmission of at least 20%, this being determined on a 0.1 mm thick, non-pigmented testpiece.

5. Process according to claim 4, characterised in that the transmission of the testpiece in the temperature range from 10°C below LCST to at least 50°C below LCST is > 80%.

6. Process according to claim 1, characterised in that the information is entered by means of temperature change at a rate of > 10°C/sec.

7. Process according to claim 1, characterised in that at least one polymer phase has a domain size in the range from $10^2$ nm$^2$ to $10^6$ nm$^2$.

8. Process according to claims 1 to 7, characterised in that at least 0.1% by weight of the polymer P1 is covalently bonded to the polymer P2.

9. Process according to claim 8, characterised in that the polymer P1 is covalently bonded to the polymer P2 as a result of the block structure or by grafting.

10. Process according to claims 1 to 9, characterised in that the mixing ratio of polymer P1 to polymer P2 is in the range from 90:10 parts by weight to 10:90 parts by weight.

22

11. Process according to claims 1 to 10, characterised in that the polymer mixture is colcured.

12. Process according to claims 1 to 11, characterised in that the polymer mixture P is used directly without a carrier base.

13. Process according to claims 1 to 12, characterised in that the polymer mixture P is located on a carrier base.

14. Process according to claim 13, characterised in that the polymer mixture P is embedded using a carrier base and a covering.

15. Process according to claims 1 to 14, characterised in that the polymer mixture P is used in a layer thickness of < 1 mm.

16. Process according to claims 1 to 15, characterised in that the polymer mixture P is incorporated in a material which acts as a matrix M.

17. Process according to claim 16, characterised in that the refractive index of the material which forms the matrix M coincides with the refractive index of the polymer mixture P below the LCST.

18. Process according to claim 17, characterised in that the polymer mixture P is incorporated in a material M serving as a matrix in the form of discrete particles having a diameter in the range from 20 nm to 200 $\mu$m.

19. Process according to claims 1 to 18, characterised in that at least one polymer component of the polymer mixture P has been produced by emulsion polymerisation.

20. Process according to claims 1 to 19, characterised in that both polymer components P1 and P2 of the polymer mixture P have been produced by emulsion polymerisation.

21. Process according to claim 20, characterised in that the emulsion polymerisation is carried out by the core-shell principle, in which a latex made up predominantly of the polymer component P1 (P2) acts as the seed latex for the emulsion polymerisation of the polymer component P2 (P1).

22. Process according to claim 21, characterised in that the emulsion polymerisation is carried out in a process comprising at least three steps, comprising, successively, polymerisation to form the polymer component P1 (P2), to form the polymer component P2 (P1) and the polymer component PM, the abbreviation PM indicating a polymer material which is compatible with the matrix M and, particularly preferably, is chemically identical to the matrix M.

23. Process according to claims 14 to 22, characterised in that the glass transition temperature of the compatible polymer mixture P is below 0°C.

24. Process according to claims 14 to 23, chaacterised in that the glass transition temperature of the compatible polymer mixture P is below -50°C.

25. Process according to claim 24, characterised in that the glass transition temperature Tg of the polymer mixture P is at least 100°C below the LCST.

26. Process according to claims 1 to 25, characterised in that the polymer mixture P or the entire system containing the polymer mixture P is maintained at a working temperature of, at the highest, 20°C below LCST, before the information is applied.

27. Process according to claims 1 to 26, characterised in that the information detected as turbidity in the polymer mixture P is fed in digitally.

**Revendications**

1. Procédé d'enregistrement, de mémorisation et de reproduction d'informations lisibles optiquement sur un support, avec utilisation de matière plastique qui, sous l'influence d'énergie thermique ou d'une forme d'énergie directement convertible en énergie thermique, peut être modifiée de façon différenciable optiquement, la matière plastique utilisée étant un mélange de polymères P d'au moins deux polymères P1 et P2 différents, compatibles entre eux et non solubles dans l'eau dans la gamme de température de 0 - 100°C, et la modification de façon différenciable optiquement étant produite par transition de phase entre un mélange de polymères compatibles au-dessous de la LCST et des polymères P1 et P2 démélangés au-dessus de la LCST ou par le processus inverse, étant spécifié que la transition entre une zone à une seule phase, caractérisée par la compatibilité des polymères, et la zone à deux phases caractérisée par le démélangeage est produite par élévation de température et le processus dans le sens inverse est produit par abaissement de la température, caractérisé en ce que le mélange de polymères P a une température de dissolution critique inférieure LCST au-dessous de 140°C.

2. Procédé selon la revendication 1, caractérisé en ce que les polymères se distinguent par une différence de leur indice de réfraction d'au moins 0,03.

3. Procédé selon la revendication 1 ou 2, caractérisé en ce que le mélange de polymères P a une LCST inférieure à 100°C.

4. Procédé selon l'une quelconque des revendications 1 à 3, caractérisé en ce qu'avec une élévation de température qui, à partir de 10°C au-dessous de la LCTS, conduit à 10°C au-dessus de la LCTS, il se produit une réduction de la transmission d'au moins 20%, la détermination étant effectuée sur une éprouvette non pigmentée de 0,1 mm d'épaisseur.

5. Procédé selon la revendication 4, caractérisé en ce que dans la gamme de température de 10°C au-dessous de la LCST à au moins 50°C au-dessous de la LCST, la transmission de l'éprouvette est supérieure à 80%.

6. Procédé selon la revendication 1, caractérisé en ce que l'introduction des informations s'effectue par modification de la température à une vitesse de plus de 10°C/s.

7. Procédé selon la revendication 6, caractérisé en ce qu'au moins une phase de polymère présente une grandeur de domaines de l'ordre de $10^2$ nm$^2$ à $10^6$ nm$^2$.

8. Procédé selon l'une quelconque des revendications 1 à 7, caractérisé en ce qu'au moins 0,1% en poids du polymère P1 est uni par liaison covalente au polymère P2.

9. Procédé selon la revendication 8, caractérisé en ce que le polymère P1 est uni par liaison covalente au polymère P2 selon une structure séquencée ou par greffage.

10. Procédé selon l'une quelconque des revendications 1 à 9, caractérisé en ce que le rapport de mélange du polymère P1 au polymère P2 se situe dans la gamme de 90:10 parties en poids à 10:90 parties en poids.

11. Procédé selon l'une quelconque des revendications 1 à 11, caractérisé en ce que la mélange de polymères est coloré.

12. Procédé selon l'une quelconque des revendications 1 à 11, caractérisé en ce que le mélange de polymères P est utilise directement sans substrat de support.

13. Procedé selon l'une quelconque des revendications 1 à 11, caractérisé en ce que le mélange de polymères P se trouve sur un substrat de support.

14. Procédé selon la revendication 13, caractérisé en ce que le mélange de polymeres P est inclus avec utilisation d'un substrat de support et d'une couche de recouvrement.

15. Procédé selon l'une quelconque des revendications 1 à 14, caractérisé en ce que le melange de polyméres P est mis en oeuvre en une épaisseur de couche de moins de 1 mm.

16. Procédé selon l'une quelconque des revendications 1 à 15, caractérisé en ce que le mélange de polymères P est incorporé dans un matériau servant de matrice M.

17. Procédé selon la revendication 16, caractérisé en ce que l'indice de réfraction du matériau constituant la matrice M coïncide avec l'indice de refraction du mélange de polymères P au-dessous de la LCST.

18. Procédé selon la revendication 17, caractérisé en ce que la mélange de polymères P est incorporé dans un matériau M servant de matrice sous forme de particules discrètes ayant un diamètre de l'ordre de 20 nm à 200 μm.

19. Procédé selon l'une quelconque des revendications 1 à 18, caractérisé en ce qu'au moins un composant polymère du mélange de polymères P a été préparé par polymérisation en émulsion.

20. Procédé selon l'une quelconque des revendications 1 à 19, caractérisé en ce que les deux composants polymères P1 et 92 du mélange de polymères P ont été préparés par polymérisation en émulsion.

21. Procédé selon la revendication 20, caractérisé en ce que la polymérisation en émulsion est effectuée suivant le principe du noyau-enveloppe, un latex composé dans une large mesure du composant polymère P1 (P2) servant de latex d'ensemencement pour la polymérisation en émulsion du composant polymère P2 (P1).

22. Procédé selon la revendication 21, caractérisé en ce que la polymérisation en émulsion est conduite en une opération comprenant au moins trois étapes, à savoir successivement la polymérisation pour le composant polymère P1 (P2), pour le composant polymère P2 (P1) et pour le composent polymère PM, PM désignant une matière polymère qui est compatible avec la matrice M et qui, de façon particulièrement préférée, est chimiquement identique à la matrice M.

23. Procédé selon l'une quelconque des revendications 14 à 22, caractérisé en ce que la température de transition vitreuse du mélange de polymères compatibles P se situe au-dessous de 0 °C.

24. Procédé selon l'une quelconque des revendications 14 à 23, caractérisé en ce que la température de transition vitreuse du mélange de polymères compatibles P se situe au-dessous de -50 °C.

25. Procédé selon la revendication 24, caractérisé en ce que la température de transition vitreuse Tg du mélange de polymères P est inférieure d'au moins 100 °C à la LCST.

26. Procédé selon l'une quelconque des revendications 1 à 25, caractérisé en ce que le mélange de polymères P ou la totalité du système contenant le mélange de polymères P est maintenu à une température de travail de 20 °C au maximum au-dessous de la LCST avant que les informations ne soient appliquées.

27. Procédé selon l'une quelconque des revendications 1 à 26, caractérisé en ce les informations, perçues en tant que trouble du mélange de polymères P, sont enregistrées numériquement.